# EUROPEAN PATENT SPECIFICATION

(11) **EP 4 178 181 B1**
(45) Date of publication and mention of the grant of the patent: **04.03.2026**
(21) Application number: 21852999.8
(22) Date of filing: 08.06.2021
(51) Int. Cl.: G06F 1/16, H04M 1/02, F16C 11/04

(54) **ELECTRONIC DEVICE COMPRISING HINGE MODULE**
ELEKTRONISCHE VORRICHTUNG MIT SCHARNIERMODUL
DISPOSITIF ÉLECTRONIQUE COMPRENANT UN MODULE DE CHARNIÈRE

(30) Priority: 03.08.2020 KR 20200096722
(43) Date of publication of application: 10.05.2023
(73) Proprietor: Samsung Electronics Co., Ltd., Gyeonggi-do 16677 (KR)
(72) Inventor: KIM, Jongyoon, Suwon-si Gyeonggi-do 16677 (KR); KIM, Jongkeun, Suwon-si Gyeonggi-do 16677 (KR)
(74) Representative: HGF
(86) International application number: PCT/KR2021/007118
(87) International publication number: WO 2022/030743

(56) References cited:
- EP-A1- 3 674 836
- KR-A- 20110 127 340
- KR-A- 20110 127 340
- KR-A- 20190 064 939
- KR-A- 20190 135 159
- KR-B1- 101 894 456
- KR-B1- 101 894 456
- US-A1- 2018 324 964
- US-A1- 2020 117 245
- US-A1- 2020 174 531

## Description

### [Technical Field]

Various embodiments disclosed herein relate to an electronic device, for example, an electronic device in which at least one pair of housings are pivotably coupled to each other via a hinge module.

### [Background Art]

With the development of electronic, information, and communication technologies, various functions are being integrated into a single portable communication device or electronic device. For example, a smartphone includes functions of a sound playback device, an imaging device, or a digital diary, in addition to a communication function, and more various functions may be implemented in the smartphone through additional installation of applications.

Without being limited to the functions (e.g., applications) or information provided in a portable communication device or an electronic device itself, the user is capable of searching for and selectively acquiring more information by accessing a network. In accessing a network, a direct access method (e.g., wired communication) may provide fast and stable communication establishment, but a utilization area may be limited to a fixed location or a predetermined extent of space. In accessing a network, a wireless communication method has few restrictions on location or space, and the transmission speed and stability are gradually reaching the same level as the direct access method. In the future, it is expected that the wireless communication method will provide faster and more stable communication establishment than the direct access method.

With the widespread use of personal or portable communication devices, such as smartphones, user demands for portability and ease of use are increasing. For example, a touch screen display may provide a virtual keypad that replaces a mechanical input device (e.g., a button input device) while serving as an output device that outputs a screen (e.g., visual information). Accordingly, portable communication devices or electronic devices have come to be capable of providing the same or further improved usability (e.g., a larger screen) while being miniaturized. On the other hand, with the commercialization of flexible, for example, foldable or rollable displays, the portability and ease of use of electronic devices may be further improved.
US 2020174531A1 relates to an assembly and a device, and more particularly to a hinge assembly and an electronic device using the hinge assembly.
EP 3674836A1 relate to an electronic device including a hinge structure.
KR 101894456B1 relates to a case device comprising a first member for supporting one end of a flexible display, a second member for supporting the other end of the flexible display, and a hinge unit for rotatably connecting the first member and the second member to each other.
US 20180324964A1 relates to electronic devices with a foldable flexible display on the outer surface thereof.
KR 1020110127340A relates to a tilting hinge device and an assembly method thereof.

### [Detailed Description of the Invention]

### [Technical Problem]

In implementing an electronic device in a foldable or rollable type, it may be difficult to ensure mechanical stability while enabling the structures of the electronic device to relatively move (e.g., slide, rotate, or pivot) with respect to each other. For example, it may be difficult to ensure a stable operating structure in a foldable or rollable electronic device while ensuring or maintaining portability of the electronic device through miniaturization and reduction in weight and thickness.

According to various embodiments disclosed herein, it is possible to provide an electronic device including a hinge module configured to pivotably couple at least one pair of housings to each other.

According to various embodiments disclosed herein, it is possible to provide an electronic device including a hinge module capable of stably implementing an operation in which the housings are folded or unfolded by providing a compact and stable gear interlocking structure.

According to various embodiments disclosed herein, it is possible to provide an electronic device that is capable of stably maintaining the state in which the housings are folded or unfolded.

### [Technical Solution]

The present invention is defined by the independent claims. Further aspects of the present invention are outlined in the dependent claims. According to various embodiments disclosed herein, an electronic device may include a first housing, a second housing, and a hinge module configured to pivotably couple the first housing and the second housing to each other, wherein the hinge module may include a hinge bracket, a first rotation bracket including a first internal gear and pivotably mounted to the hinge bracket, a second rotation bracket including a second internal gear and pivotably mounted to the hinge bracket, a first gear shaft rotatably mounted in the hinge bracket, wherein a portion of the first gear shaft is meshed with the first internal gear, and a second gear shaft rotatably mounted in the hinge bracket, wherein a portion of the second gear shaft is meshed with the second internal gear, and wherein each of the first gear shaft and the second gear shaft may include a rotation supporting hole which is formed through at least one end thereof and is rotatably coupled to the hinge bracket.

According to various embodiments disclosed herein, an electronic device may include a first housing, a second housing, a hinge module configured to pivotably couple the first housing and the second housing to each other, and a flexible display disposed to extend from one surface of the first housing to one surface of the second housing across an area in which the hinge module is disposed, wherein the hinge module may include at least one rotation supporting pole, a hinge bracket including at least one rotation hole provided adjacent to the rotation supporting pole, a first rotation bracket including a first internal gear and pivotably mounted on the hinge bracket, a second rotation bracket including a second internal gear and pivotably mounted on the hinge bracket, a first gear shaft rotatably mounted in the hinge bracket, wherein a portion of the first gear shaft is meshed with the first internal gear, and a second gear shaft rotatably mounted in the hinge bracket, wherein a portion of the second gear shaft is meshed with the second internal gear, and wherein another portion of the first gear shaft and another portion of the second gear shaft may be meshed with each other in the hinge bracket, one of the first gear shaft and the second gear shaft may be rotatably accommodated in the rotation hole, and another one of the first gear shaft and the second gear shaft may be configured to be rotatably coupled to the rotation supporting pole.

### [Advantageous Effects]

According to various embodiments disclosed herein, the hinge module may pivotably couple at least one pair of housings while interlocking the operations of the housings by using a gear structure. According to an embodiment, in disposing gears (e.g., gear shafts to be described later) meshed with the internal gear, the rotation hole for accommodating the first gear shaft and the rotation supporting pole for supporting the rotation of the second gear shaft are disposed adjacent to each other. Therefore, it may be easy to downsize to first and second gear shafts, which are meshed with each other, while ensuring sufficient mechanical strength in the hinge bracket. For example, it is easy to reduce the diameter of the gears, and it is possible to downsize the hinge module. In some embodiments, while a driving force that pivots the housings beyond a predetermined is generated by an elastic force in the state in which the housings are unfolded at a predetermined angle, the rotation bracket and the slide member restrict the housings from pivoting beyond the predetermined angle. As a result, the electronic device is able to stably maintain the state of being unfolded at the predetermined angle.

### [Brief Description of Drawings]

FIG. 1 is a view illustrating the unfolded state of an electronic device according to various embodiments disclosed herein.
FIG. 2 is a view illustrating the folded state of the electronic device according to various embodiments disclosed herein.
FIG. 3 is an exploded perspective view illustrating an electronic device according to various embodiments disclosed herein.
FIG. 4 is a view illustrating a structure in which a first housing and a second housing are connected to each other in an electronic device according to various embodiments disclosed herein.
FIG. 5 is an exploded perspective view illustrating a hinge module of an electronic device according to various embodiments disclosed herein.
FIG. 6 is a plan view illustrating a hinge module of an electronic device according to various embodiments disclosed herein.
FIG. 7 is a perspective view illustrating a first bracket member of the hinge module in an electronic device according to various embodiments disclosed herein.
FIG. 8 is a perspective view illustrating the first bracket member of the hinge module viewed from another direction in an electronic device according to various embodiments disclosed herein.
FIG. 9 is a perspective view illustrating a first gear shaft of the hinge module in an electronic device according to various embodiments disclosed herein.
FIG. 10 is a projection view illustrating a state in which the first gear shaft and/or the second gear shaft of the hinge module are disposed in the hinge bracket in an electronic device according to various embodiments disclosed herein.
FIG. 11 is a partially enlarged perspective view illustrating the first rotation bracket and/or the second rotation bracket of the hinge module in an electronic device according to various embodiments disclosed herein.
FIG. 12 is a view for describing a state in which the first gear shaft of the hinge module is meshed with the internal gear of the first rotation bracket in an electronic device according to various embodiments disclosed herein.
FIG. 13 is a view for describing pivot axes of the first rotation bracket and/or the second rotation bracket of the hinge module in an electronic device according to various embodiments disclosed herein.
FIG. 14 is a view for describing the unfolded state of an electronic device according to various embodiments disclosed herein.
FIG. 15 is a view for describing the arrangement of a hinge module in the unfolded state of an electronic device according to various embodiments disclosed herein.
FIG. 16 is a perspective view illustrating the hinge module in the unfolded state of an electronic device according to various embodiments disclosed herein.
FIG. 17 is a view illustrating a position of a first slide member in the unfolded state of an electronic device according to various embodiments disclosed herein.
FIG. 18 is a view for describing a state in which the housings of an electronic device are located to be inclined to each other at an angle of about 90 degrees according to various embodiments disclosed herein.
FIG. 19 is a view for describing the arrangement of the hinge module in a state in which the housings of an electronic device are located to be inclined to each other at an angle of about 90 degrees according to various embodiments disclosed herein.
FIG. 20 is a view illustrating the position of the first slide member in a state in which the housings of an electronic device are inclined at an angle of about 90 degrees according to various embodiments disclosed herein.
FIG. 21 is a view for describing the folded state of an electronic device according to various embodiments disclosed herein.
FIG. 22 is a view for describing the arrangement of the hinge module in the folded state of an electronic device according to various embodiments disclosed herein.
FIG. 23 is a perspective view illustrating the hinge module in the folded state of an electronic device according to various embodiments disclosed herein.
FIG. 24 is a view illustrating a position of a first slide member in the folded state of an electronic device according to various embodiments disclosed herein.
FIGS. 25 and 26 are views for describing modifications of the rotation brackets in the hinge module of an electronic device according to various embodiments disclosed herein.
FIG. 27 is a plan configuration view illustrating the configuration of an electronic device according to another one of various embodiments disclosed herein.
FIG. 28 is a perspective view illustrating a state in which a linkage chain is disposed in the unfolded state of an electronic device according to another one of various embodiments disclosed herein.
FIG. 29 is a perspective view illustrating a state in which the linkage chain is disposed in the folded state of an electronic device according to another one of various embodiments disclosed herein.
FIG. 30 is a view for describing the arrangement of a first linkage chain among the linkage chains in the unfolded state of the electronic device according to another one of various embodiments disclosed herein.
FIG. 31 is a view for describing the arrangement of a second linkage chain among the linkage chains in the unfolded state of the electronic device according to another one of various embodiments disclosed herein.
FIG. 32 is a view for describing the arrangement of the first linkage chain among the linkage chains in the state in which the housings of the electronic device according to another one of various embodiments disclosed herein are located to be inclined to each other at an angle of about 90 degrees.
FIG. 33 is a view for describing the arrangement of the second linkage chain among the linkage chains in the state in which the housings of the electronic device according to another one of various embodiments disclosed herein are located to be inclined to each other at an angle of about 90 degrees.
FIG. 34 is a view for describing the arrangement of the first linkage chain among the linkage chains in the folded state of the electronic device according to another one of various embodiments disclosed herein.
FIG. 35 is a view for describing the arrangement of the second linkage chain among the linkage chains in the folded state of the electronic device according to another one of various embodiments disclosed herein.
FIG. 36 is a plan view illustrating the hinge module of an electronic device according to still another one of various embodiments disclosed herein.
FIG. 37 is an enlarged view of the stopper structure in the hinge module of an electronic device according to still another one of various embodiments disclosed herein.
FIG. 38 is a perspective view illustrating the hinge module in the folded state of an electronic device according to still another one of various embodiments disclosed herein.
FIG. 39 is a perspective view illustrating a hinge module in the state in which the housings of an electronic device according to still another one of various embodiments disclosed herein are inclined at an angle of about 90 degrees.
FIG. 40 is a perspective view illustrating the hinge module in the state in which an electronic device according to still another one of various embodiments disclosed herein is unfolded to be close to a predetermined angle.
FIG. 41 is an enlarged view of the stopper structure in the state in which an electronic device according to still another one of various embodiments disclosed herein is unfolded to be close to a predetermined angle.
FIG. 42 is an enlarged view of the stopper structure in the state in which an electronic device according to still another one of various embodiments disclosed herein is unfolded at a predetermined angle.
FIG. 43 is a side view illustrating the configuration of the hinge module in the state in which an electronic device according to still another one of various embodiments disclosed herein is unfolded at a predetermined angle.

### [Mode for Carrying out the Invention]

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor of the machine (e.g., the electronic device) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

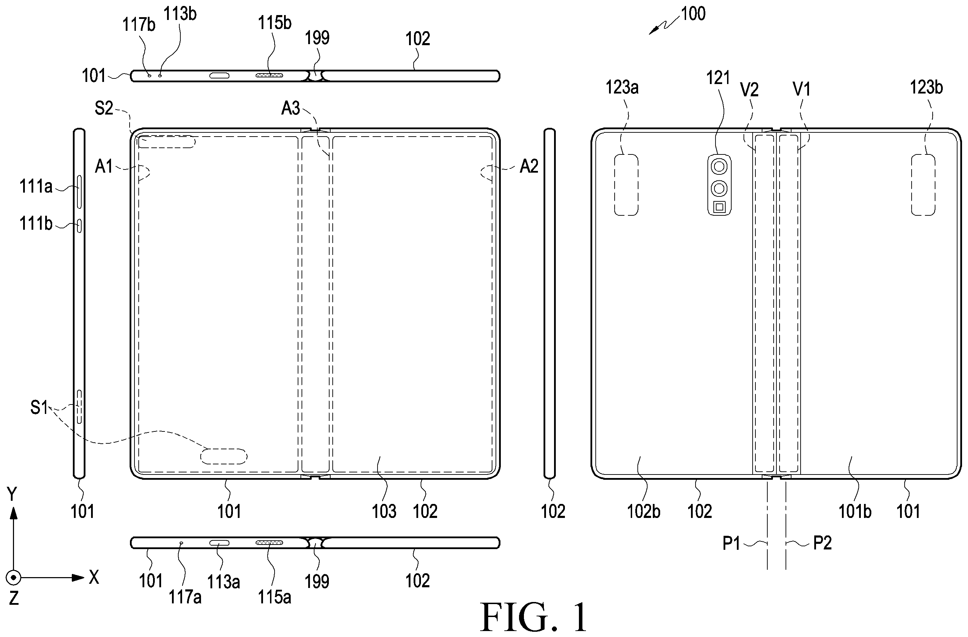

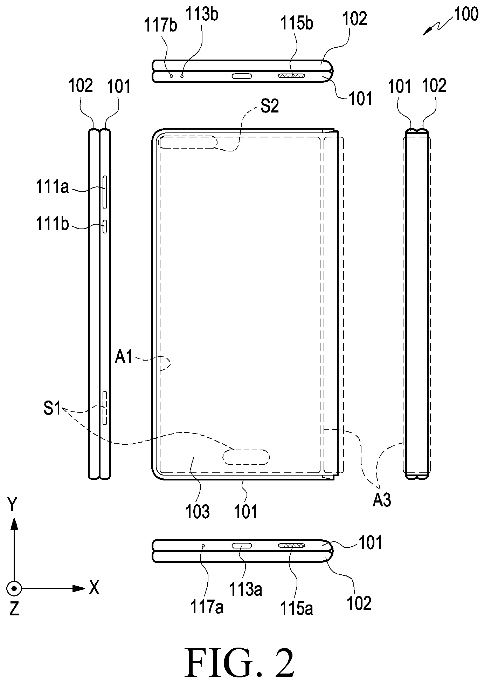

FIG. 1 is a view illustrating the unfolded state of an electronic device 100 according to various embodiments disclosed herein. FIG. 2 is a view illustrating the folded state of the electronic device 100 according to various embodiments disclosed herein.

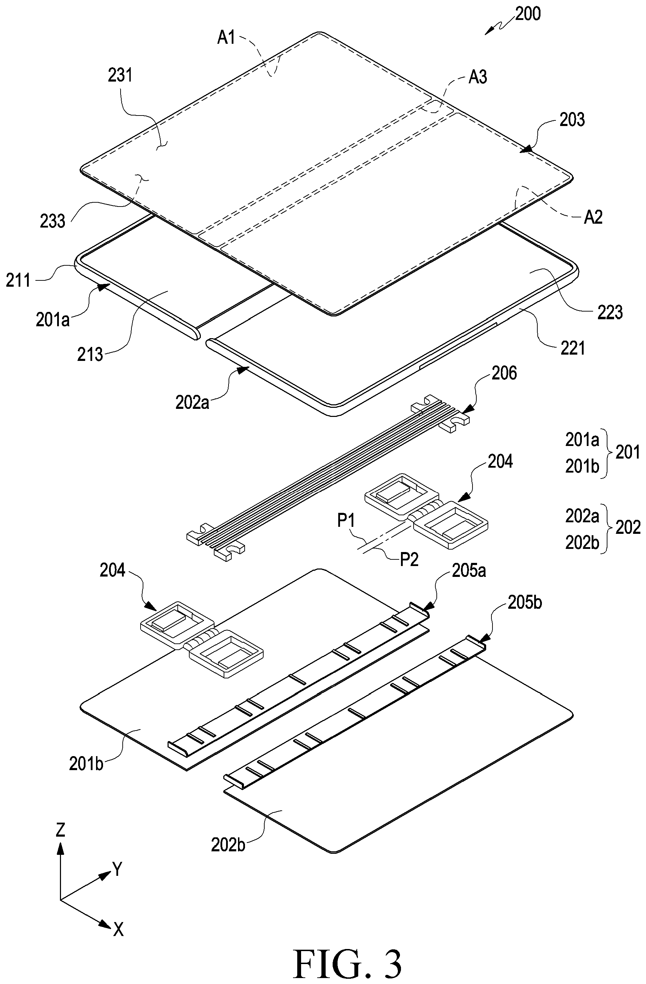

In describing various embodiments disclosed herein, a configuration in which a pair of housings (e.g., a first housing 101 and a second housing 102) are pivotably coupled to each other via a hinge module (e.g., the hinge module 204 in FIG. 3) may be illustrated. However, it is noted that this embodiment does not limit the electronic device 100 according to various embodiments disclosed herein. For example, the electronic device 100 according to various embodiments disclosed herein may include three or more housings, and "a pair of housings" in the embodiments to be disclosed below may mean "two housings pivotably coupled to each other among the three or more housings".

In the following detailed description, reference may be made to "+X/-X direction", "+Y/-Y direction", or "+Z/-Z direction", and it is noted that the Cartesian coordinate system to be described later is generally described with reference to the width direction X, the length direction Y, or the thickness direction Z of the first housing 101 in FIG. 1 or FIG. 2. For example, the above definition of directions may be variously changed in some embodiments or when the directions are set with reference to another structure of the electronic device 100. In addition, in the following detailed description, the "front surface" or "rear surface" of the electronic device 100 or the housings 101 and 102 may be referred to, in which, irrespective of a relative position (e.g., an unfolded state or a folded state) of the housings 101 and 102, the surface on which the flexible display 103 of FIG. 1 is disposed is defined as the "front surface" of the electronic device 100 (or the housings 101 and 102), and a surface facing away from the surface on which the flexible display 103 is disposed is defined as the "rear surface" of the electronic device 100 (or the housings 101 and 102).

Referring to FIGS. 1 and 2, the electronic device 100 may include a pair of housings 101 and 102, a flexible display 103, and a hinge module (e.g., the hinge modules 204 in FIG. 3) that pivotably couples the housings 101 and 102. The electronic device 100 may further include a hinge cover(s) 199 disposed on the upper end and/or the lower end. The hinge cover(s) 199 may be disposed substantially between the first housing 101 and the second housing 102, and may block the hinge module 204 from being visually exposed to the outside. In another embodiment, the hinge cover(s) 199 may isolate an internal space of the electronic device 100 from an external space. In some embodiments, the hinge cover(s) 199 may be visually exposed to the outside in the unfolded state of the electronic device 100, and may be visually hidden in the state in which the electronic device 100 is folded.

According to various embodiments, as illustrated in FIG. 1, in the unfolded state of the electronic device 100 (e.g., the first housing 101 and the second housing 102), the flexible display 103 may output a screen substantially in one direction (e.g., the +Z direction) through the entire area thereof. As illustrated in FIG. 2, in the folded state of the electronic device 100, a first area A1 of the flexible display 103 is oriented in the +Z direction, and a second area A2 of the flexible display 103 is oriented in the -Z direction. For example, the flexible display 103 may include areas (e.g., the first area A1 and the second area A2) disposed to face away from each other in the folded state of the electronic device 100. For example, the first housing 101 and the second housing 102 are pivotable between a position at which the first and second housings are unfolded to be arranged side by side and a position at which the first and second housings are folded to face each other. According to an embodiment, the flexible display 103 may include a folding area A3, and in the folded state of the electronic device 100, the folding area A3 may be disposed to be oriented substantially in the +X direction. For example, in the state in which the first housing 101 and the second housing 102 are folded to face each other, the flexible display 103 may be visually exposed to the outside.

According to various embodiments, the first housing 101 and/or the second housing 102 may accommodate the flexible display 103 on the front surfaces thereof, and may include rear plates 101b and 102b (e.g., the first rear plate 201b and the second rear plate 202b in FIG. 3) disposed on the rear surfaces thereof. The electronic device 100 may include a plurality of electrical components disposed in the space between the flexible display 103 and the rear plates 101b and 102b (e.g., a circuit board, various sensor modules, a battery, a sound input/output module, a camera module, a haptic module, an antenna, and/or a connection terminal). The first housing 101 may be coupled to the hinge module 204 to be pivotable about a first pivot axis P1, and the second housing 102 may be coupled to the hinge module 204 to be pivotable about a second pivot axis P2. In some embodiments, the first housing 101 and the second housing 102 may be disposed to be substantially symmetrical to each other about the hinge module 204. In another embodiment, when the first housing 101 pivots about the hinge module 102, the second housing 102 may pivot in a direction reverse to that of the first housing 101, whereby the electronic device 100 may be folded or unfolded.

According to various embodiments, the flexible display 103 may include a first area A1 disposed on one surface of the first housing 101, a folding area A3 disposed corresponding to the hinge module 204, and/or a second area A2 disposed on one surface of the second housing 102. For example, the flexible display 103 may be disposed or extend from the one surface of the first housing 101 to the one surface of the second housing 102 across the area in which the hinge module 204 is disposed. In practice, the first area A1 may be fixed to the first housing 101, the second area A2 may be fixed to the second housing 102, and/or the folding area A3 may be supported by a multi-bar assembly (e.g., the multi-bar assembly 206 in FIG. 3). For example, the multi-bar assembly 206 may be disposed between the first housing 101 and the second housing 102 on the front surface of the electronic device 100 to support the flexible display 103 (e.g., the third area or folding area A3). In an embodiment, the flexible display 103 may output a screen through an area substantially corresponding to the total area of the front surface of the electronic device 100.

According to various embodiments, the width measured from the side surface of the first housing 101 to the side surface of the second housing 102 in the X-axis direction in the unfolded state across the position at which the hinge module 204 is disposed may be substantially the same on the front surface of the electronic device 100 (e.g., the flexible display 103) and on the rear surface of the electronic device 100. The width measured from the side surface of the first housing 101 to the side surface of the second housing 102 in the X-axis direction in the folded state across the position at which the hinge module 203 is disposed may be smaller on the rear surface of the electronic device 100 than on the front surface of the electronic device 100 (e.g., the flexible display 103). The first area A1 and the second area A2 of the flexible display 103 are fixed to the first housing 101 and the second housing 102 and the width measured in the X-axis direction is substantially unchangeable in the flexible display 103 (e.g., the front surface of the electronic device 100). Thus, the width measured in the X-axis direction on the rear surface of the electronic device 100 is changeable. For example, the change in the width measured in the X-axis direction on the rear surface of the electronic device 100 may be implemented by allowing a partial area of the rear surface of the electronic device 100 (e.g., the area indicated by "V1" and/or the area indicated by "V2") to contract or expand. In another embodiment, the change in the width measured in the X-axis direction on the rear surface of the electronic device 100 may be implemented through the sliding of the first housing 101 and/or the second housing 102 relative to the hinge module 204. In another embodiment, when the first housing 101 and/or the second housing 102 slide with respect to the hinge module 204 and the area indicated by "V1" and/or the area indicated by "V2" contract or expand on the rear surface of the electronic device 100 to correspond to the sliding of the first housing 101 and/or the second housing 102, the width measured in the X-axis direction is changeable.

According to various embodiments, the change in the length of the rear surface of the electronic device 100 according to the unfolding or folding operation may vary depending on the distance between the first pivot axis P1 and the second pivot axis P2 and/or the relative positions of the first pivot axis P1 and the second pivot axis P2 relative to the flexible display 103. In some embodiments, the change in the length of the rear surface of the electronic device 100 according to the unfolding or folding operation may be proportional to the distance between the flexible display 103 and the rear surface of the electronic device 100. For example, as the thickness of the electronic device 100 measured in the Z direction increases, the change in the length of the rear surface of the electronic device 100 according to the unfolding or folding operation may increase.

According to various embodiments, the electronic device 100 (e.g., the first housing 101 and/or the second housing 102) may include one or more sensor areas S1 and S2 each of which is provided with at least one sensor module. For example, the electronic device 100 may include a first sensor area S1 provided on the front or side surface of the first housing 101 and/or a second sensor area S2 provided on the front surface of the first housing 101. In the first sensor area S1, for example, a fingerprint recognition sensor may be disposed. The fingerprint recognition sensor may include, for example, an optical fingerprint recognition sensor or an ultrasonic fingerprint recognition sensor, and may be disposed on the side surface of the first housing 101 (or the second housing 102) or inside the flexible display 103. The electronic device 100 may include a sensor module provided in the second sensor area S2, for example, at least one of a camera module, a proximity sensor, an illuminance sensor, an iris recognition sensor, an ultrasonic sensor, or an indicator. In the second sensor area S2, the sensor module(s) may be disposed inside the flexible display 103.

According to various embodiments, the electronic device 100 may include a notch portion protruding from the second sensor area S2 to the first area A1 of the flexible display 103. The notch portion may be a structure constituting the first housing 101 (or the second housing 102), and at least some of the sensor modules may be disposed in the notch portion. The notch portion may have a polygonal shape, a circular shape, or an elliptical shape. In another embodiment, in the second sensor area S2, the flexible display 103 may include a transparent area that allows external light to be incident therein. For example, among the sensor modules, an optical sensor, such as a camera module or a proximity sensor, may be disposed to correspond to the transparent area of the flexible display 103. The electronic device 100 (e.g., the sensor areas S1 and S2 or the sensor modules) according to various embodiments disclosed herein is not limited to the above-described configuration. Depending on functions provided in the electronic device 100 or functions of respective sensor modules mounted in the electronic device 100, the electronic device 100 may further include an additional sensor area or an additional sensor module. In some embodiments, the electronic device 100 may not include some of the above-mentioned sensor modules.

According to various embodiments, the electronic device 100 may include a camera module 121 disposed on the rear surface thereof (e.g., the rear surface of the second housing 102). In some embodiments, the camera module 121 may be interpreted as one of sensor modules, and may include a plurality of cameras, at least one infrared projector, at least one infrared receiver, and/or a flash. The user may photograph a subject by using the camera module 121 provided on the rear surface of the electronic device 100 (e.g., the second housing 102). In an embodiment, the camera module 121 may be disposed at another position (e.g., a position indicated by reference numeral "123a" or "123b"), and the electronic device 100 may further include an additional camera module or sensor module at a position different from the positions indicated in FIG. 1.

According to various embodiments, the electronic device 100 may include one or more key input devices 111a and 111b disposed on the side surface of the first housing 101 (and/or the second housing 102). The key input devices 111a and 111b may include, for example, a volume control key 111a and/or a power key 111b. In some embodiments, the illustrated key input devices 111a and 11b may be omitted, or an additional key input device may be provided. An additional key input device may include, for example, a function key for activating a camera mode or a voice assistant service. In some embodiments, the electronic device 100 may further include a soft key provided via the flexible display 103.

According to various embodiments, the electronic device 100 may include one or more connector holes 113a and 113b disposed in a side surface (e.g., the side surface, the upper end surface, and/or the lower end surface of the first housing 101 and/or the second housing 102). The connector holes 113a and 113b may include, for example, a first connector hole 113a for connecting a charging/data cable, and a second connector hole 113b for connecting a sound device (e.g., an earphone). In some embodiments, the data cable may refer to a cable provided to the sound device. For example, the second connector hole 113b may be omitted from the electronic device 100, and the electronic device 100 may be connected to the sound device via the first connector hole 113a. In another embodiment, the electronic device 100 may not include the connector holes 113a and 113b. For example, the electronic device 100 may include functions such as wireless charging, Bluetooth communication, wireless fidelity (WiFi) direct, or infrared data association (IrDA) so as to be connected to a personal computer, another electronic device such as a smartphone, and/or an additional device, such as a wireless charging pad or an earphone, in a wireless manner.

According to various embodiments, the electronic device 100 may include a plurality of sound output holes 115a and 115b and a plurality of sound input holes 117a and 117b. In the illustrated embodiment, the sound output holes 115a and 115b may be disposed at the upper end and the lower end of the first housing 101 (and/or the second housing 102), respectively. In another embodiment, the sound output holes 115a and 115b may be disposed in the side surface of the first housing 101 and the side surface of the second housing 102, respectively. For example, the electronic device 100 may output sound in a plurality of different directions through the plurality of sound input holes 117a and 117b. The sound input holes 117a and 117b may be disposed at the upper and lower ends of the electronic device 100 (e.g., the first housing 101), respectively. The electronic device 100 may perform, in a voice call or sound recording mode, functions, such as audio beam forming, active noise canceling (ANC), echo canceling (EC), noise suppression (NS), and/or feedforward (FF), by acquiring external sound in a plurality of different directions through the plurality of sound input holes 117a and 117b. In some embodiments, a sound input hole (not illustrated) may be further provided in the rear surface of the first housing 101 (and/or the second housing 102). The electronic device 100 may acquire, in a photographing mode, external sound through the sound input hole disposed in the rear surface of the first housing 101. As the number and oriented directions of the sound input holes 117a and 117b increase, the electronic device 100 is capable of providing improved performances in terms of the audio beam forming function, the active noise canceling (ANC) function, the echo canceling (EC) function, the noise suppression (NS) function, and/or the feedforward (FF) function.

According to various embodiments, in the unfolded state, the first housing 101 and the second housing 102 may be disposed to form a predetermined angle (e.g., 180 degrees) with respect to each other. When the electronic device 100 is unfolded to a predetermined angle, the flexible display 103 may output a screen in the +Z direction through substantially the entire area. In some embodiments, the first housing 101 and the second housing 102 may be unfolded in an inclined form between the folded position facing each other and a predetermined angular position. In the state of being unfolded in the inclined form, the first area A1 and the second area A2 of the flexible display 103 may output screens in different directions. For example, when unfolded in the inclined form, the electronic device 100 may provide screens to two users who sit facing each other. When the electronic device 100 outputs screens in the state of being unfolded in the inclined form, the screen output from the first area A1 and the screen output from the second area A2 may be the same as or different from each other.

According to various embodiments, in the folded state, the flexible display 103 may be substantially visually exposed to the outside. For example, the electronic device 100 may output a screen by using the first area A1, the second area A2, and/or the folding area A3. In some embodiments, in the standby mode, the electronic device 100 may deactivate the screen of the flexible display 103 and may activate a partial area according to predetermined setting. For example, in the standby mode, the electronic device 100 may at least partially activate the first area A1 to output daily information, such as time or weather. According to another embodiment, in the standby mode, the electronic device 100 may activate at least one of the first area A1, the second area A2, and/or the folding area A3 so as to provide visual information about the operating state or display notification information, such as messages or news.

According to various embodiments, the radius of curvature of the folding area A3 of the flexible display 103 may vary while the electronic device 100 is being folded or unfolded. For example, as the electronic device 100 is gradually unfolded from the folded state, the radius of curvature of the folding area A3 may gradually increase. In the folding or unfolding operation, the electronic device 100 may adjust a screen output through the folding area A3. For example, by adjusting the aspect ratio of the screen in the folding area A3 depending on the change in the radius of curvature, the electronic device 100 may compensate for the distortion of the output screen due to the deformation of the folding area A3.

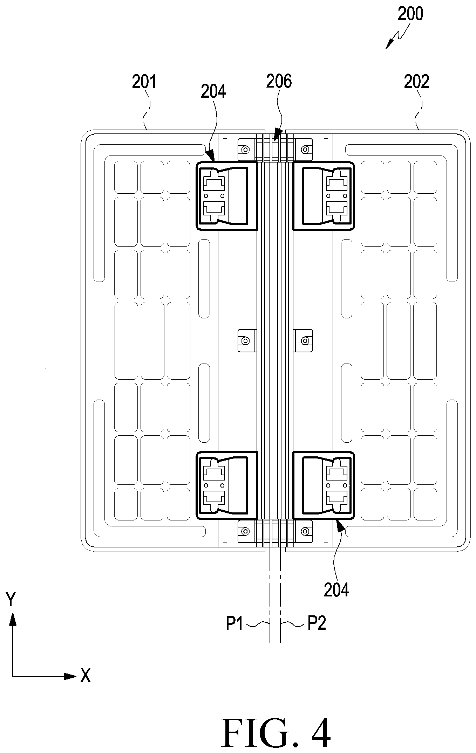

FIG. 3 is an exploded perspective view illustrating an electronic device 200 (e.g., the electronic device 100 in FIG. 1 and/or FIG. 2) according to various embodiments disclosed herein. FIG. 4 is a view illustrating a structure in which a first housing 101 and a second housing 102 are connected to each other in the electronic device 200 according to various embodiments disclosed herein.

Referring to FIGS. 3 and 4, the electronic device 200 (e.g., the electronic device 100 of FIG. 1 or FIG. 2) may include a first housing 201 (e.g., the first housing 101 in FIG. 1 or FIG. 2), a second housing 202 (e.g., the second housing 102 of FIG. 1 or FIG. 2) pivotably connected to the first housing 201, at least one hinge module 204 pivotably coupling the first housing 201 and the second housing 202 to each other, and/or a flexible display 203 (e.g., the flexible display 103 of FIG. 1 or FIG. 2). The flexible display 203 may be disposed to extend from one surface (e.g., the front surface) of the first housing 201 to one surface (e.g., the front surface) of the second housing 202 across the area in which the hinge module 204 is disposed.

According to various embodiments, the first housing 201 may include a first housing member 201a and a first rear plate 201b coupled to the first housing member 201a. The second housing 202 may include a second housing member 202a and a second rear plate 202b coupled to the second housing member 202a. The first housing 201 and the second housing 202 may have substantially the same structure, and may be partially different from each other depending on electrical components disposed on respective housings. For example, when the camera module 121 of FIG. 1 is disposed in one of the first housing 201 and the second housing 202, the shapes of the first housing 201 and the second housing 202 (e.g., the first rear plate 201b and the second rear plate 202b) or the mechanical structures of the first housing member 201a and the second housing member 202a may be slightly different from each other. The difference between the first housing 201 and the second housing 202 may vary depending on an actually manufactured product.

According to various embodiments, the first housing member 201a substantially configures an external appearance of the electronic device 200 (e.g., the first housing 201), and may include a first side bezel structure 211 and a first support plate 213. The first side bezel structure 211 may have a frame shape that defines a side surface (e.g., the left side surface in FIG. 1), the upper end surface, and/or the lower end surface of the first housing 101, and may be open in a direction adjacent to the second housing 202. According to an embodiment, the first side bezel structure 211 may include a metal and/or a polymer, and may be electrically connected to a processor or a communication module of the electronic device 200 in some embodiments. For example, the first side bezel structure 211 may function as an antenna of the electronic device 200 by at least partially including a metal and/or an electrically conductive material. In some embodiments, the first side bezel structure 211 may provide a decorative effect in the external appearance of the electronic device 200 or provide an electrically insulating structure by including various coating layers.

According to various embodiments, the first support plate 213 may be disposed in the space between the flexible display 203 and the first rear plate 201b and may be connected to the first side bezel structure 211. In some embodiments, the first support plate 213 may be integrated with the first side bezel structure 211, and may include the same material as the first side bezel structure 211, for example, a metal and/or a polymer. In an embodiment, the first support plate 213 may provide an electromagnetic shielding structure inside the electronic device 200 by including a metal and/or a conductive material. In another embodiment, since the first support plate 213 may function as a ground conductor providing a reference potential inside the electronic device 200 by including a metal and/or a conductive material. In some embodiments, a flexible display 103 (e.g., the first area A1) may be positioned on the outer surface of the first support plate 213.

According to various embodiments, the first rear plate 201b may be made of, for example, coated or colored glass, ceramic, a polymer, a metal (e.g., aluminum, stainless steel (STS), or magnesium), or a combination of at least two of above-mentioned materials. In some embodiments, the first rear plate 201b may be substantially integrated with the first housing member 201a (e.g., the first side bezel structure 211). In an embodiment, at least a portion of the first rear plate 201b may include a curved area. For example, an edge portion of the first rear plate 201b adjacent to the first side bezel structure 211 may include a portion that is bent toward the front surface of the electronic device 200 (e.g., the surface on which the flexible display 203 is disposed) to extend seamlessly. In another embodiment, the first rear plate 201b may be disposed to be inclined with respect to the first area A1 of the flexible display 103. For example, when the edge of the first rear plate 201b adjacent to the second housing 202 is located at a first height from the first area A1 of the flexible display 203, the end of the first rear plate 201b in the -X direction may be located at a second height lower than the first height.

According to various embodiments, the space between the first support plate 213 and the first rear plate 201b may be at least partially surrounded by the first side bezel structure 211. Although not illustrated, in the electronic device 200, various electric components, such as a printed circuit board, a battery, a haptic module, a camera module, a sensor module(s) and/or a connection terminal may be accommodated in the space between the first support plate 213 and the first rear plate 201b. For example, the first support plate 213 may be used as a structure that prevents other electrical components of the electronic device 200 from coming into contact with the flexible display 203. Some of the electrical components accommodated in the electronic device 200, for example, a camera module (e.g., the camera module 121 in FIG. 1), may be partially exposed to the external space. Here, the description "exposed to the external space" may mean including a component that is isolated from the external space but is visually exposed and/or a component that is exposed to be directly touchable by a user. On the printed circuit board, a processor, a memory, and/or an interface may be located.

The processor may include at least one of, for example, a central processing unit, an application processor, a graphics processing unit, an image signal processor, a sensor hub processor, or a communication processor. The battery is a device for supplying power to at least one component of the electronic device 200, and may include, for example, a non-rechargeable primary battery, a rechargeable secondary battery, or a fuel cell. At least a portion of the battery may be disposed, for example, between the first support plate and the first rear plate to be substantially flush with the printed circuit board. The battery may be integrally disposed inside the electronic device 200, or may be disposed to be detachably disposed on the electronic device 200.

According to various embodiments, an additional support plate and/or an additional antenna (not illustrated) may be provided in the space between the first support plate 213 and the first rear plate 201b. The additional support plate may improve the mechanical rigidity of the electronic device 200, and may provide an electromagnetic shielding structure between electrical components inside the electronic device 200. The antenna may be disposed between the first support plate 213 (and/or an additional support plate (not illustrated)) and the first rear plate 201b. The antenna may perform short-range communication with an external device or wirelessly transmitting and receiving power required for charging by including, for example, a near field communication (NFC) antenna, a wireless charging antenna, and/or a magnetic secure transmission (MST) antenna. In another embodiment, the antenna structure may be constituted with a portion of the first side bezel structure 211 and/or a portion of the first support plate 213 or a combination thereof.

According to various embodiments, the second housing 202 may include a second housing member 202a (e.g., the second side bezel structure 221 and a second support plate 223) and a second rear plate 202b, and may have a structure similar to the structure of the first housing 201. Therefore, a detailed description thereof will be omitted. In some embodiments, as described above, the electrical components disposed in the first housing 201 and/or the second housing 202, such as the key input devices 111a and 111b of FIG. 1, the sensor areas S1 and S2, and/or the camera modules 121 may be different from each other. Thus, the second housing 202 may be partially different from the first housing 201 in shape or structure.

According to various embodiments, the hinge module 204 may pivotably couple the second housing 202 to the first housing 201. According to an embodiment, the first housing 201 may be coupled to the hinge module 204 to be pivotable about the first pivot axis P1, and the second housing 202 may be coupled to the hinge module 204 to be pivotable about the second pivot axis P2. For example, the first housing 201 and the second housing 202 may be folded by pivoting in the opposite directions with respect to each other in the unfolded state. In the folded state, the first housing 201 and the second housing 202 may pivot in the opposite directions with respect to each other to be unfold to a predetermined angle. Here, the "predetermined angle" may mean an angle of 180 degrees.

According to various embodiments, the second pivot axis P2 may be disposed parallel to the first pivot axis P1 at a predetermined distance from the first pivot axis P1. In another embodiment, the second pivot axis P2 may coincide with the first pivot axis P1. In some embodiments, the hinge module 204 may interlock the pivoting of the second housing 202 with the pivoting of the first housing 201. For example, when the first housing 201 pivots in a first direction about the first pivot axis P1 (e.g., counterclockwise when viewed from the state illustrated in FIG. 3), the hinge module 204 may pivot the second housing 202 in a second direction opposite to the first direction (e.g., clockwise when viewed in the state illustrated in FIG. 3). According to an embodiment, the hinge module 204 may provide a frictional force when the first housing 201 and/or the second housing 202 pivot. For example, when a user applies an external force to a certain extent, the hinge module 204 may allow the pivoting of the first housing 201 and/or the second housing 202, and when the external force is not applied, the hinge module 204 may maintain the first housing 201 and/or the second housing 202 in a stationary state. In another embodiment, the hinge module 204 may maintain the first housing 201 and/or the second housing 202 in a stationary state at a predetermined angular position (e.g., a 0-degree angular position (the folded position), a 180-degree angular position (the unfolded position), and/or a position unfolded in an inclined form at an angle of about 120 degrees to 160 degrees) by using a cam structure.

According to various embodiments, the flexible display 103 may include a display panel 231 and a display protection layer 233. The display panel 231 may include a light-emitting layer disposed between transparent substrates, and the transparent substrates may include electric circuits such as a touch sensor. For example, the display panel 231 may be made of, for example, an organic-light emitting diode (OLED) or a micro LED to output visual information, and to detect a user's direct touch on the display panel 231 or a user's motion performed within a predetermined distance from the display panel 231. The display protection layer 233 may attach the display panel 231 to the first housing 201 and/or the second housing 202, and may be made of an elastic material so as to be used as a buffer material between the display panel 231 and a mechanical structure (e.g., the first housing 201 and/or the second housing 202).

According to various embodiments, the flexible display 203 may include a first area A1 located on the first housing 201, a second area A2 located on the second housing 202, and a folding area A3 (e.g., a third area) interconnecting the first area A1 and the second area A2. The folding area A3 may be disposed to substantially correspond to the area in which the hinge module 204 is disposed, and may be deformed into a flat shape or a curved shape while the electronic device 200 (e.g., the electronic device 100 in FIG. 1 or FIG. 2) is being folded or unfolded. In the unfolded state of the electronic device 200, the flexible display 203 may output a screen in one direction (e.g., the +Z direction in FIG. 1 or FIG. 3) by using substantially the entire area. In the folded state of the electronic device 200, the flexible display 203 may output screens in different directions by using the first area A1 and the second area A2.

According to various embodiments, the electronic device 200 may further include a first slide plate 205a and a second slide plate 205b. The first slide plate 205a may be located on the first housing member 201a (e.g., the first support plate 213), and a portion of the hinge module 204 may be slidably coupled between the first support plate 213 and the first slide plate 205a. The second slide plate 205b may be located on the second housing member 201a (e.g., the second support plate 223), and a portion of the hinge module 204 may be slidably coupled between the second support plate 223 and the second slide plate 205b. For example, the first slide plate 205a and the second slide plate 205b couple the first housing 201 and/or the second housing 202 to the hinge module 204 to guide or support the sliding of the first housing 201 and/or the second housing 202. According to an embodiment, the first slide plate 205a and/or the second slide plate 205b may not be included in the electronic device 200.

According to various embodiments, the electronic device 200 (e.g., the electronic device 100 in FIGS. 1 and/or 2) may further include a multi-bar assembly 206. The multi-bar assembly 206 may be disposed to correspond to the area in which the hinge module 204 is disposed, and may connect the first support plate 213 and the second support plate 223 to each other. For example, the multi-bar assembly 206 may be disposed to support the folding area A3 of the flexible display 203. In an embodiment, the multi-bar assembly 206 may include a plurality of (e.g., five) bars or rods extending in one direction. The bars or rods of the multi-bar assembly 206 may have a circular, oval, or polygonal cross section, and are disposed parallel to the length direction Y of the electronic device 200, for example, the first pivot axis P1 and/or the second pivot axis P2. In an embodiment, the plurality of bars or rods may be arranged in the width direction of the electronic device 200 (e.g., the X-axis direction) to be pivotably connected to other adjacent bars or rods. Since the bars or rods pivot with respect to other adjacent bars or rods, the multi-bar assembly 206 may be deformed into a flat shape and/or a curved shape. For example, when the electronic device 200 is folded or unfolded, the multi-bar assembly 206 is capable of supporting the folding area A3 of the flexible display 203 while being deformed corresponding to the folding area A3 of the flexible display 203. In the unfolded state of the electronic device 200, when there is a contact of an external object or a user contact on the folding area A3, the multi-bar assembly 206 is capable of supporting the folding area A3 to suppress the deformation of the folding area A3.

In the following detailed description, if necessary, reference may be made to the electronic device 100 or 200 of FIGS. 1 to 4 and/or the hinge module 204. In describing the following embodiments, the components, which are the same as those of the preceding embodiments or can be easily understood through the preceding embodiments, may be denoted by the same reference numerals or the reference numerals thereof may be omitted, and the detailed descriptions thereof may also be omitted.

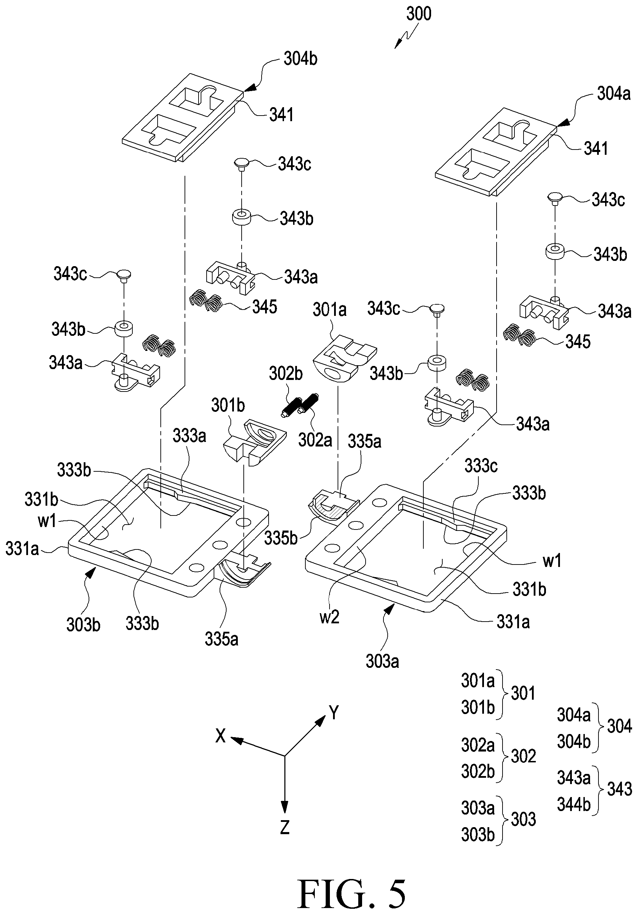

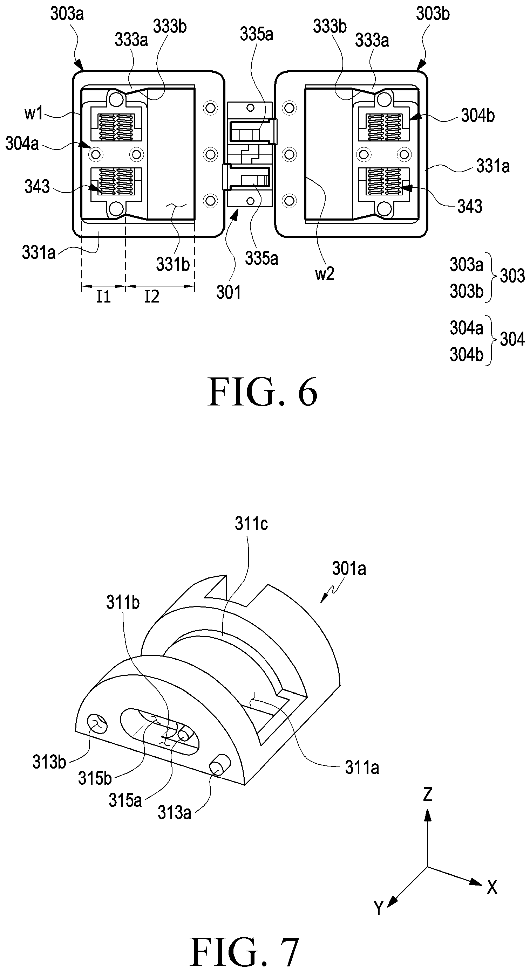

FIG. 5 is an exploded view illustrating a hinge module 300 (e.g., the hinge module 204 in FIG. 3) for an electronic device (e.g., the electronic device 100 or 200 in FIGS. 1 to 4) according to various embodiments disclosed herein. FIG. 6 is a plan view illustrating the hinge module 300 of the electronic device 200 according to various embodiments disclosed herein.

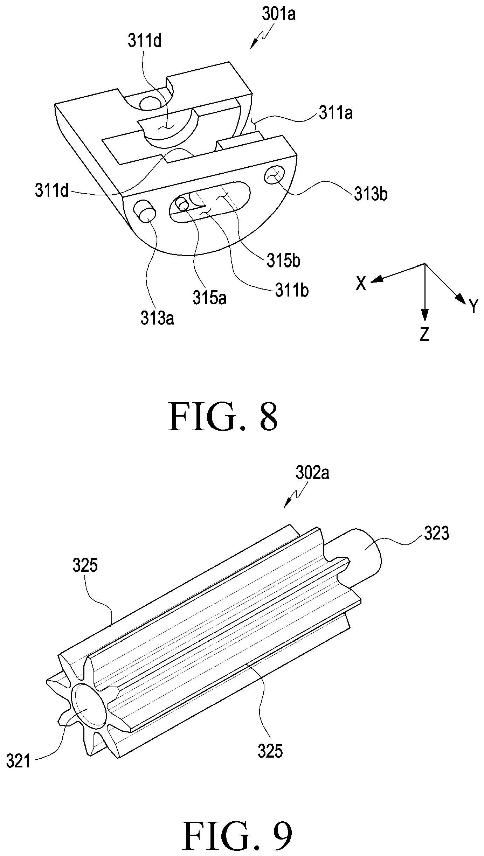

Referring to FIGS. 5 and 6, the hinge module 300 may include a hinge bracket 301, a pair of rotation bracket 303 and/or a pair of gear shaft 302 configured to interlock the rotation brackets 303 to pivot in opposite directions with respect to each other, and at least one of the gear shafts 302 may include a rotation supporting hole (e.g., the first rotation supporting hole 321 in FIG. 9) rotatably coupled to the hinge bracket 301. As will be described with reference FIGS. 7 to 10, the gear shafts 302 are meshed with each other within the hinge bracket 301, and a rotation supporting pole (e.g., the first rotation supporting pole 315a in FIG. 7) of the hinge bracket 301 is rotatable within the hinge bracket 301. In another embodiment, the hinge bracket 301 may provide a space in which the gear shafts 302 are disposed by including a rotational hole(s) (e.g., the rotational hole 315b in FIG. 7) adjacent to the first rotational support pole 315a. In some embodiments, the rotation hole 315b may be disposed adjacent to the first rotation supporting pole 315a.

According to various embodiments, the hinge bracket 301 may include a first bracket member 301a and a second bracket member 301b. The first bracket member 301a may be, for example, a structure that guides or supports the pivoting of the first housing (e.g., the first housing 201 in FIGS. 1 to 4), and the second bracket member 301b may be a structure that guides or supports the pivoting of the second housing (e.g., the second housing 202 in FIGS. 1 to 4). However, this embodiment does not limit the disclosure, and in another embodiment, the first bracket member 301a may guide or support the pivoting of the second housing 202. In some embodiments, the first bracket member 301a and the second bracket member 301b may be integrally configured, and in this embodiment, the first bracket member 301a and the second bracket member 301b are separated from each other in order to facilitate the assembly of the gear shafts 302 or the rotation brackets 303. According to an embodiment, the first bracket member 301a and the second bracket member 301b may have the same shape as each other, and may implement the hinge bracket 301 illustrated in FIG. 6 by being coupled to face each other in the Y-axis direction. In some embodiments, the first bracket member 301a and the second bracket member 301b may be disposed in the multi-bar assembly 206 of FIG. 3 and/or FIG. 4. For example, the hinge bracket 301 illustrated in FIG. 6 may be implemented by assembling the first bracket member 301a and the second bracket member 301b to the multi-bar assembly 206. An embodiment regarding the shape of the first bracket member 301a (and/or the second bracket member 301b) will be described with further reference to FIGS. 7 and 8.

FIG. 7 is a perspective view illustrating the first bracket member 301a of a hinge module (e.g., the hinge modules 204 or 300 in FIGS. 3 to 6) in the electronic device (e.g., the electronic device 100 or 200 of FIGS. 1 to 4) according to various embodiments disclosed herein. FIG. 8 is a perspective view illustrating the first bracket member 301a of the hinge module 204 or 300, viewed from a different direction, in the electronic device according to various embodiments disclosed herein.

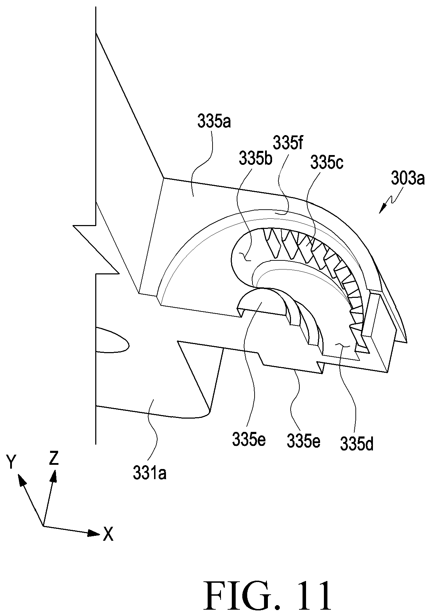

With further reference to FIGS. 7 and 8, the first bracket member 301a (and/or the second bracket member 301b) may include a first working space 311a, a coupling protrusion 313a, a coupling hole 313b, a rotation supporting pole 315a, and/or a rotation hole 315b. The first working space 311a is a space provided in an area between both end surfaces of the first bracket member 301a, and may accommodate portions of the rotation brackets 303, for example, a hinge arm and/or an internal gear (e.g., the hinge arm 335a and/or the internal gear 335c in FIG. 11). For example, the rotation brackets 303 may be partially accommodated in the first working space 311a, thereby being coupled to the hinge bracket 301. The first bracket member 301a (and/or the second bracket member 301b) may include at least one first guide curved surface 311c and at least one guide hole 311d provided in the inner wall of the first working space 311a. In an embodiment, the first guide curved surface 311c and/or the guide hole 311d may provide means for coupling the rotation brackets 303 to the first bracket member 301a (and/or the second bracket member 301b), and, in another embodiment, the first guide curved surface 311c and/or the guide hole 311d may guide or support the pivoting of the rotation brackets 302.

According to various embodiments, the coupling protrusion 313a and/or the coupling hole 313b may substantially set the alignment state of the first bracket member 301a and the second bracket member 301b, and the first bracket member 301a and the second bracket member 301b may be coupled to each other by being disposed on the multi-bar assembly 206. According to an embodiment, the coupling protrusion 313a and/or the coupling hole 313b may each be provided in one end surface of the first bracket member 301a (and/or the second bracket member 301b) in the Y-axis direction. For example, the first bracket member 301a and the second bracket member 301b are coupled such that one end surfaces thereof face each other in the Y-axis direction, wherein the coupling protrusion 313a of the first bracket member 301a may be coupled to the coupling hole 313b of the second bracket member 301b, and the coupling protrusion 315a of the second bracket member 301b may be coupled to the coupling hole 313b of the first bracket member 301a.

According to various embodiments, the first rotation supporting pole 315a and/or the rotation hole 315b may be substantially disposed between the first working space 311a and one end surface of the first bracket member 301a (and/or the second bracket 301b) to be visually exposed to the external space. On one end surface of the first bracket member 301a, the first rotation supporting pole 315a and/or the rotation hole 315b may be located in the area between the coupling protrusion 313a and the coupling hole 313b, and may be disposed adjacent to each other when viewed in the Y-axis direction. In some embodiments, the first bracket member 301a may further include a second working space 311b provided on one end surface. The first rotation supporting pole 315a may have a protrusion shape protruding from the bottom of the second working space 311b, and the rotation hole 315b may be penetrated from the second working space 311b to the first working space 311a at a position adjacent to the first rotation supporting pole 135a. According to an embodiment, one of the gear shafts 302 is rotatably accommodated in the rotation hole 315b, and the other one of the gear shafts 302 may rotate while being supported by the first rotation supporting pole 315a. In another embodiment, one of the gear shafts 302 may be partially meshed with a rotation bracket (e.g., the internal gear 335c in FIG. 11) within the first working space 311a, and another portion may be meshed with the other one of the gear shafts 302 within the second working space 311b.

FIG. 9 is a perspective view illustrating the first gear shaft 302a of the hinge module (e.g., the hinge modules 204 or 300 in FIG. 3 or FIG. 5) in the electronic device (e.g., the electronic device 100 or 200 of FIGS. 1 to 4) according to various embodiments disclosed herein.

Referring further to FIG. 9 together with FIGS. 5 and 6, the gear shafts 302, for example, the first gear shaft 302a, may extend in one direction (e.g., the Y-axis direction) and may include a plurality of gear teeth 325 provided on the outer circumferential surface. The gear teeth 325 may extend, for example, in the longitudinal direction (e.g., the Y-axis direction) of the first gear shaft 302a, and may be arranged in the circumferential direction of the first gear shaft 302a. According to an embodiment, the first gear shaft 302a may include a rotation supporting hole 321 provided at one end in the longitudinal direction and a second rotation supporting pole 323. In an embodiment, the rotation supporting hole 321 accommodates the first rotation supporting pole 315b (e.g., the first rotation supporting pole 315b of the first bracket member 301a) in the second working space 311b, whereby the first gear shaft 302a may be rotatably coupled to the hinge bracket 301. In another embodiment, the first gear shaft 302a is rotatably coupled to the rotation hole 315b (e.g., the rotation hole 315b of the second bracket member 301b), thereby being rotatably accommodated in the hinge bracket 301. The second rotation supporting pole 323 may be accommodated in the rotation bracket (e.g., the rotation guide groove 335d of FIG. 11) in the first working space 311a and may be rotated within the hinge bracket 301 as the rotation brackets 303 pivot with respect to the hinge bracket 301. The second gear shaft 302b may be substantially the same as the first gear shaft 301a, and may be different from the first gear shaft 301a in the arrangement on the electronic device 100 or 200 and/or the hinge modules 204 or 300. Therefore, a detailed description of the shape or structure of the second gear shaft 302b will be omitted.

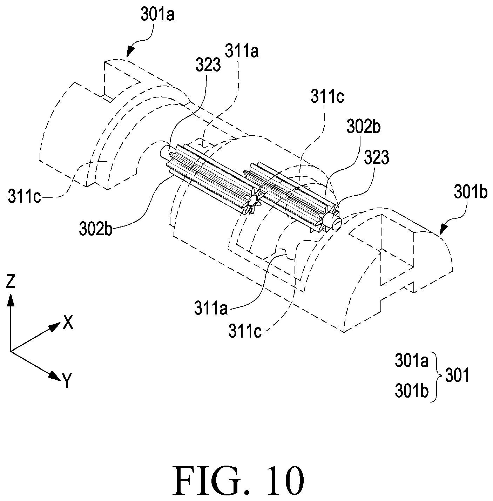

FIG. 10 is an example of a projection view illustrating a state in which the first gear shaft 302a and/or the second gear shaft 302b of the hinge module (e.g., the hinge modules 204 or 300 in FIG. 3 or FIG. 5) are disposed in the hinge bracket 301 in an electronic device (e.g., the electronic device 100 or 200 in FIGS. 1 to 4) according to various embodiments disclosed herein.

It is noted that although FIG. 10 illustrates the configuration in which the first gear shaft 302a and the second gear shaft 302b are disposed in the hinge bracket 301, but the disclosure is not limited thereto. For example, the first gear shaft 302a and the second gear shaft 302b may be assembled in a state in which the rotation brackets 303 are first coupled to the hinge bracket 301, and FIG. 10 illustrates the hinge bracket 301 in the state in which the rotation brackets 303 are omitted in order to describe the arrangement of the first gear shaft 302a and the second gear shaft 302b within the hinge bracket 301.

Further referring to FIG. 10, when the first bracket member 301a and the second bracket member 301b are coupled, the first rotation supporting pole 315a of the first bracket member 301a may be aligned to face the rotation hole 315b of the second bracket member 301b. Similarly, when the first bracket member 301a and the second bracket member 301b are coupled, the first rotation supporting pole 315a of the second bracket member 301b may be aligned to face the rotation hole 315b of the first bracket member 301a. For example, the second working space 311b of the first bracket member 301a and the second working space 311b of the second bracket member 301b may be coupled to provide or define one space. In an embodiment, the first gear shaft 302a may be rotatably coupled to the first rotation supporting pole 315a of the second bracket member 301b while being rotatably accommodated in the rotation hole 315b of the first bracket member 301a.

According to various embodiments, in the state in which the first gear shaft 302a is accommodated in the rotation hole 315b of the first bracket member 301a, a portion of the first gear shaft 302a may be provided in the first working space 311a in the first rotation bracket 301a, and another portion of the first gear shaft 302a may be disposed in the second working space 311b of the first rotation bracket 301a and/or the second rotating bracket 301b. For example, the rotation supporting hole 321 of the first gear shaft 302a may be rotatably coupled to the first rotation supporting pole 315a of the second bracket member 301b. Similar to the first gear shaft 302a, the second gear shaft 302b may be rotatably coupled to the first support pole 315a of the first bracket member 301a while being rotatably disposed in the second bracket member 301b. In an embodiment, the first gear shaft 302a and the second gear shaft 302b may be meshed with each other within one space provided by the coupling of the second working spaces 311b.

According to various embodiments, as the diameter of the first gear shaft 302a and/or the second gear shaft 302b decreases, it may be easy to downsize the hinge modules 204 or 300 and/or the electronic device 100 or 200. In an embodiment, the first rotation supporting pole 315a may be provided in the first gear shaft 302a and/or the second gear shaft 302b, and the rotation supporting hole 321 may be provided in the first bracket member 301a and/or the second bracket member 301b. In the structure in which both the rotation hole 315b and the rotation supporting hole 321 are provided in the first bracket member 301a and/or the second bracket member 301b, the rotation hole 315b and the rotation supporting hole 321 may be disposed closer together as the diameter of the first gear shaft 302a and/or the second gear shaft 302b decreases. In some embodiments, when the rotation hole 315b and the rotation supporting hole 321 are disposed too close to each other in the hinge bracket 301, the strength of the mechanical structure between the rotation hole 315b and the rotation supporting hole 321 may be lowered. According to various embodiments disclosed herein, it is possible to ensure the strength of the mechanical structure in the hinge bracket 301 and to downsize the diameter of the first gear shaft 302a and/or the second gear shaft 302b by providing the first rotation supporting pole 315a adjacent to the rotation hole 315b in the hinge bracket 301, and providing the rotation supporting hole 321 in the gear shafts 302. For example, by appropriately disposing the rotation supporting hole 321 and/or the first rotation supporting pole 315a according to the specifications required for an actually manufactured product, it may be easy to implement a hinge module (e.g., the hinge modules 204 or 300 in FIG. 3 or FIG. 5) suitable for an electronic device (e.g., the electronic device 100 or 200 in FIGS. 1 to 4) which is reduced in size or thickness.

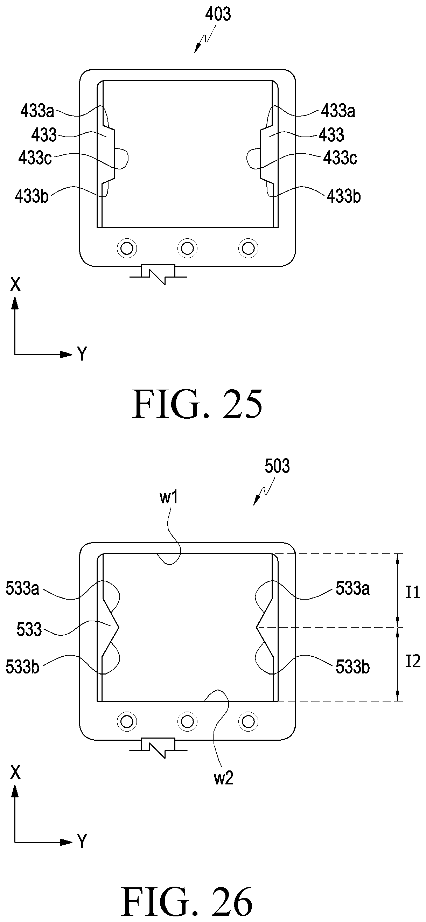

Referring back to FIGS. 5 and 6, the rotation brackets 303 (e.g., the first rotation bracket 303a and/or the second rotation bracket 303b) may each include a frame member 331a, guide ribs 333a, and/or a hinge arm 335a. The frame member 331a may substantially define a slide hole 331b and may be slidably coupled to the first housing 201 or the second housing 202. For example, the frame member 331a may linearly reciprocate by a predetermined range on the support plates 213 and 223 of FIG. 3. In an embodiment, the guide ribs 333a may protrude from the inner wall of the frame member 331a (or the inner wall of the slide hole 331b) to the space defined as the slide hole 331b in the Y-axis direction and extend in the X-axis direction. In some embodiments, the guide ribs 333a may be respectively provided in portions that are parallel to the X-axis direction in the inner wall of the frame member 331a. In some embodiments, the first rotation bracket 303a and/or the second rotation bracket 303b may further include inclined surfaces 333b provided on the inner wall of the slide hole 331b. The inclined surfaces 333b may be substantially portions of the guide ribs 333a, respectively, and may provide protrusions (e.g., the protrusions 433 or 533 in FIG. 25 or FIG. 26) at both ends of the slide hole 331b, for example, both ends in the X-axis direction.

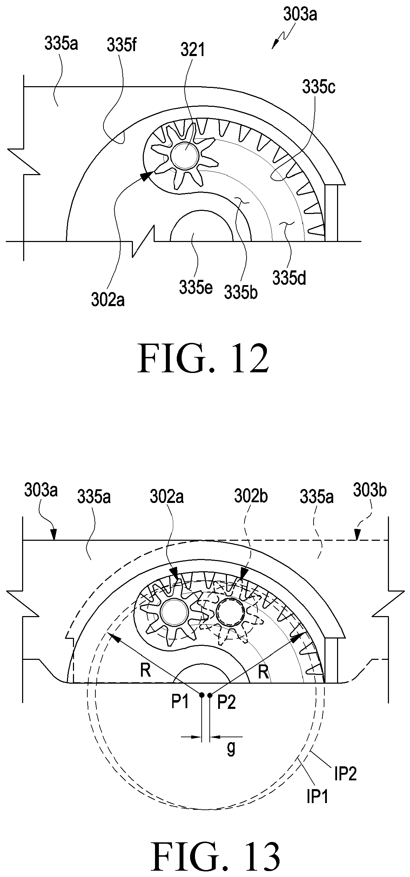

FIG. 11 is a partially enlarged view illustrating the first hinge bracket 303a and/or the second hinge bracket 303b of the hinge module (e.g., the hinge modules 204 or 300 in FIG. 3 or FIG. 5) in an electronic device (e.g., the electronic device 100 or 200 in FIGS. 1 to 4) according to various embodiments disclosed herein. FIG. 12 is a view for describing a state in which the first gear shaft 302a of the hinge module 300 is meshed with the internal gear 335c of the first rotation bracket 303a in an electronic device (e.g., the electronic device 100 or 200) according to various embodiments disclosed herein.

Further referring to FIGS. 11 and 12, the hinge arm 335a of the first rotation bracket 303a (and/or the second rotation bracket 303b) protrudes from one side of the frame member 331a, and may be substantially accommodated in or coupled to the first working space 311a of the hinge bracket 301. In an embodiment, the hinge arm 335a may be at least partially accommodated in the first working space 311a, and may form or define a third working space 335b. For example, the third working space 335b may include an internal gear 335c configured with an arrangement of teeth, a rotation guide groove 335d extending along the arrangement direction of the teeth, a second guide curved surface 335f, and/or guide protrusions 335e. According to an embodiment, the internal gear 335c may be located substantially inside the first working space 311a, and may be meshed with one of the gear shafts 302 (e.g., the first gear shaft 302a in FIG. 5 or FIG. 10). For example, when the first rotation bracket 303a pivots, the first gear shaft 302a may be rotated. In another embodiment, when the first gear shaft 302b is rotated by the second gear shaft 302b, the first rotation bracket 303a may be rotated with respect to the hinge bracket 301. The rotation guide groove 335d may accommodate the second rotation supporting pole 323 of the first gear shaft 302a or the second gear shaft 302b, and when viewed with reference to the hinge bracket 301, the rotation guide groove 335d may guide or support the pivoting of the first rotation bracket 303a together with the second rotation supporting pole 323. In some embodiments, when the first rotation bracket 303a rotates with respect to the hinge bracket 301, the second rotation supporting pole 323 moves with respect to the first rotation bracket 303a along the direction in which the rotation guide groove 335d extends while being rotated in the rotation guide groove 335d.

According to various embodiments, the second guide curved surface 335f and/or the guide protrusions 335e may pivotably couple the first rotation bracket 303a (and/or the second rotation bracket 303b) to the hinge bracket 301, and may guide or support the pivoting of the first rotation bracket 303a (and/or the second rotation bracket 303b) with respect to the hinge bracket 301. In an embodiment, the second guide curved surface 335f may be disposed to surround a portion of the hinge bracket 301 (e.g., the first guide curved surface in FIG. 7 or FIG. 10), and the guide protrusions 335e may be rotatably accommodated in the hinge bracket 301 (e.g., the guide hole 311d in FIG. 8). Further referring to, for example, FIG. 10, the first working space 311a of the hinge bracket 301 may have a shape opened in the -X direction or the +X direction when viewed in the Z-axis direction, and the hinge arm 335a may enter the first working space 311a through the opened portion. For example, the second guide curved surface 335f may enter the first working space 311a while being in sliding contact with the first guide curved surface 311c from the opened portion of the first working space 311a. The trajectory of the second guide curved surface 335f entering the first working space 311a may be an arc trajectory centered on one of the first pivot axis P1 and the second pivot axis P2 in FIG. 3 or FIG. 4.

According to various embodiments, as the second guide curved surface 335f enters the first working space 311a while being in sliding contact with the first guide curved surface 311c, the guide protrusions 335e may enter one of the guide holes 311d. For example, the third working space 335b may accommodate a partial structure of the hinge bracket 311 by using, a partial surface, for example, the space surrounded by the second guide surface 335f and the guide protrusions 335e. For example, the structure of the hinge bracket 311 between the first guide curved surface 311c and the guide hole 311d may be at least partially surrounded by the second curved guide surface 335f and the guide protrusions 335e. In an embodiment, the first guide curved surface 311c, the second guide curved surface 335f, the guide holes 311d, and/or the guide protrusions 335e may guide or support the pivoting of the first rotation bracket 303a or the second rotation bracket 303b, and may provide a reference for defining the first pivot axis P1 and/or the second pivot axis P2. For example, the trajectory of the portion in which the first guide curved surface 311c, the second guide curved surface 335f, the guide holes 311d, and/or the guide protrusions 335e are in sliding contact with each other may be one of concentric circles (or parts of concentric circles) substantially centered on one of the first pivot axis P1 or the second pivot axis P2.

According to various embodiments, in the state in which the first rotation bracket 303a is coupled to the first bracket member 301a, the first gear shaft 302a may be coupled to the first bracket member 301a. When the first rotation bracket 303a is coupled to the first bracket member 301a, at least a portion of the internal gear 335c and/or the rotation guide groove 335d may be located to face the rotation hole 315b. When the first rotation bracket 303a is coupled to the first bracket member 301a, the first gear shaft 302a may sequentially pass through the second working space 311b and the rotation hole 315b to enter the first working space 311a. For example, the first gear shaft 302a may be meshed with the internal gear 335c while entering the first working space 311a. According to an embodiment, the second rotation supporting pole 323 of the first gear shaft 302a may be substantially located in the rotation guide groove 335d, thereby guiding or supporting the pivoting of the first rotation bracket 303a. For example, the rotation guide groove 335d may be a part of one of concentric circles substantially centered on one of the first pivot axis P1 or the second pivot axis P2. The method in which the second rotation bracket 303b and/or the second gear shaft 302b are coupled to the second bracket structure 301b may be similar to the method in which the first rotation bracket 303a or the first gear shaft 302a is coupled.

According to various embodiments, in the state in which the first gear shaft 302a is coupled to the first bracket member 301a, the first rotation bracket 303a may be rotatably coupled to the first working space 311a. For example, the hinge arm 335a may enter the first working space 311a in the state in which a portion of the first gear shaft 302a is disposed in the first working space 311a. As the hinge arm 335a enters the first working space 311a, the internal gear 335c may be meshed with the first gear shaft 302a to rotate the first gear shaft 302a. In some embodiments, when the first gear shaft 302a is excessively inserted into the first working space 311a before the hinge arm 335a is disposed in the first working space 311a, the second rotation supporting pole 323 may interfere with the hinge arm 335a without entering the rotation guide groove 335d. In consideration of this point, the order of assembling the hinge arm 335a and the gear shafts 302 to the hinge bracket 301 may be appropriately selected.

According to various embodiments, in the state in which the first rotation bracket 303a and the first gear shaft 302a are coupled to the first bracket member 301a, and/or in the state in which the second rotation bracket 303a and the second gear shaft 302b are coupled to the second bracket member 301b, the first bracket member 301a and the second bracket member 301b may be coupled. In some embodiments, the description "the first bracket member and the second bracket member are coupled" may mean that the first bracket member 301a and the second bracket member 302b are assembled to the multi-bar assembly 206 of FIG. 3 or FIG. 4. In another embodiment, in a state in which the slide members 304 of FIG. 5 or 6 are assembled to the rotation brackets 303, the first bracket member 301a and the second bracket member 301b may be coupled.

FIG. 13 is view for describing pivot axes P1 and P2 of the first rotation bracket 303a and/or the second rotation bracket 303b of the hinge module (e.g., the hinge module 204 or 300 in FIG. 3 or FIG. 5) in an electronic device (e.g., the electronic device 100 or 200 in FIGS. 1 to 4) according to various embodiments disclosed herein.

Referring to FIG. 13, the electronic device 200 and/or the hinge module 300 may include a first pivot axis P1 and/or a second pivot axis P2 defined by pitch circles IP1 and IP2 of the internal gear 335c. For example, when a pitch circle corresponding to the internal gear 335c of the first rotation bracket 303a is defined as the first pitch circle IP1, the first pivot axis P1 may be the center of a radius of curvature of the first pitch circle IP1, and when a pitch circle corresponding to the internal gear 335c of the second rotation bracket 303b is defined as a second pitch circle IP2, the second pivot axis P2 may be the center of a radius of curvature of the second pitch circle IP2. In an embodiment, the first housing 201 and/or the second housing 202 may pivot about different ones of the first axis of rotation P1 and the second axis of rotation P2 between a position at which the first and second housings are unfolded by a predetermined angle (e.g., an angle of 180 degrees) and a position at which the first and second housings are folded to face each other. According to another embodiment, in the state in which the rotation brackets 303 are coupled to the hinge bracket 301, the pitch circles IP1 and IP2 of the internal gears 335f may not coincide with each other. For example, in a structure in which the internal gears 335f are interlocked by the first gear shaft 302a and the second gear shaft 302b, which are meshed with each other, the first pivot axis P1 and the second pivot axis P2 may be disposed in parallel to each other with a predetermined gap g therebetween. In some embodiments, the gap g between the first pivot axis P1 and the second pivot axis P2 may be proportional to the diameters of the gear shafts 302 or the gap between the first gear shaft 302a and the second gear shaft 302b.

Referring back to FIGS. 5 and 6, the slide members 304 may include a first slide member 304a disposed in the first rotation bracket 303a, and a second slide member 304a disposed in the second rotation bracket 303b. The first slide member 304a and the second slide member 304b may be substantially the same, and may be symmetrically disposed on the hinge module 300. In an embodiment, the first slide member 304a (and/or the second slide member 304b) may be slidably disposed in the slide hole 311b of one of the first rotation bracket 303a and the second rotation bracket 303b, and may be disposed in one of the first housing 201 and the second housing 202. For example, the first slide member 304a may be slidably coupled to the first rotation bracket 303a while being mounted in the first housing 201. In an embodiment, the guide rib 333a of the first rotation bracket 303a may be located between the first housing 201 (e.g., the first support plate 213 in FIG. 3) and the first slide member 304a, and the first housing 201 and/or the first slide member 304a may slide on the hinge module 300 while being guided by the guide rib 333a of the first rotation bracket 303a. In another embodiment, the second slide member 304a may be slidably coupled to the second rotation bracket 303b while being mounted in the second housing 202. For example, the second housing 202 and/or the second slide member 304b may slide on the hinge module 300 while being guided by the guide rib 333a of the second rotation bracket 303a. In another embodiment, the first slide member 304a may be assembled between the first support plate 213 and the first slide plate 205a, and the second slide member 304b may be assembled between the second support plate 223 and the second slide plate 205b.

According to various embodiments, the first slide member 304a and/or the second slide member 304b may include a slider 341, at least one stopper member 343 and/or at least one elastic member 345. The slider 341 may be mounted on one of the first housing 201 and the second housing 202, and may slide in the slide hole 331b toward or away from the hinge bracket 301 while being guided by the guide rib 333a. For example, in the unfolded state of the electronic device 200, the first slide member 304a and/or the second slide member 304b (e.g., the slider 341) may come into contact or interfere with a first end inner wall w1 of the slide hole 331b. In the folded state of the electronic device 200, the first slide member 304a and/or the second slide member 304b (e.g., the slider 341) may come into contact or interfere with a second end inner wall w2 of the slide hole 331b. In another embodiment, even when the electronic device 200 is in the folded state, the first slide member 304a and/or the second slide member 304b (e.g., the slider 341) may not come into contact with the second end inner wall w2 of the slide hole 331b. The first end inner wall w1 may refer to a portion of the inner wall of the slide hole 331b that is parallel to the pivot axes P1 and P2 and is located far from the hinge bracket 301, and the second end inner wall w2 may mean a portion of the inner wall of the slide hole 331b that is located adjacent to the hinge bracket 301. In some embodiments, the first end inner wall w1 and the second end inner wall w2 may extend in a longitudinal direction (the Y-axis direction) and may be parallel to each other. In another embodiment, the extending direction in which the first end inner wall w1 and the second end inner wall w2 extend may refer to a direction substantially perpendicular to the extending direction of the guide rib(s) 333a.

According to various embodiments, a pair of stopper members 343 may be accommodated in the slider 341 to be linearly reciprocable in the state of receiving the elastic force of the first elastic member 345. For example, the first elastic member 345 may be disposed between the stopper members 343 to provide the elastic force in a direction to move the stopper members away from each other. The stopper members 343 may partially protrude to the outside of the slider 341 to come into contact with the inner wall of the slide hole 331b, for example, the guide ribs 333a. In an embodiment, when the slider 341 slides, the stopper members 343 are in sliding contact with the guide ribs 333a, and when the stopper members 343 come into contact with the inclined surfaces 333b, the elastic force of the first elastic member 345 may be converted into a driving force for moving the slider 341 toward one of the first end inner wall w1 and the second end inner wall w2. For example, in the structure illustrated in FIG. 6, when the stopper members 343 are in contact with the inclined surfaces 333b, the first slide member 304a, for example, the slider 341, may be provided with a driving force acting toward the second end inner wall w2.

According to various embodiments, the stopper members 343 may each include a pressing member 343a disposed on the slider 341 to be linearly reciprocable, and a roller 343b rotatably disposed on the pressing member 343a. The roller 343b may be rotatably coupled to the pressing member 343a by a fastening member 343c such as a rivet or a screw. In an embodiment, the roller 343b may substantially come into contact with the inner wall (e.g., the guide rib 333a) of slide hole 331b, and when the first slide member 304a (e.g., the slider 341) slides, the roller 343b may relieve a frictional force generated between the stopper member 343 and the inner wall of the slide hole 331b (e.g., the guide rib 333a) while rotating. For example, in an operation in which the electronic device 200 is unfolded or folded, the first slide member 304a and/or the second slide member 304b may slide within the slide hole 331b, and in the slide operation, a frictional force may be generated between the stopper members 343 and each of the rotation brackets 303 (e.g., the inner walls of the slide hole 331b). The frictional force generated by the stopper members 343 may be relieved by the structure of the stopper members 343, for example, the rollers 343b. In some embodiments, since the frictional force is relieved, the pivoting of the housings (e.g., the first housing 201 and the second housing 202 in FIG. 3) and/or the sliding of the housings 201 and 202 relative to the hinge module 300 may be facilitated. The frictional force generated by the stopper members 343 may affect the external force required for pivoting the housings 201 and 202. For example, in consideration of the user's convenience in the operation of unfolding or folding the electronic device 200, each stopper member 343 may optionally include a roller 343b.

According to various embodiments, a plurality of first elastic members 345 may be disposed in one slide member (e.g., the first slide member 304a or the second slide member 304b). In the illustrated embodiment, a configuration in which two pairs of elastic members 345 are disposed in one slide member is exemplified, but the disclosure is not limited thereto. In FIG. 6, the number of first elastic members 345 may be appropriately selected in consideration of the width (e.g., the length measured in the X-axis direction) of the space in which the first elastic members 345 may be disposed, the range in which the stopper members 343 linearly reciprocate in the Y-axis direction and the degree deformation (e.g., compression or extension) of the first elastic members 345 according to the linear reciprocating range, and/or design variables such as the elastic modulus of the first elastic members 345. For example, in the illustrated embodiment, a configuration in which a pair of first elastic members 345 corresponding to the stopper member 343 protruding in the -Y direction are disposed, and a pair of first elastic members 345 corresponding to the stopper member 343 protruding in the +Y direction is exemplified, but when a space provided in the slider 341 allows, an arbitrary number of the first elastic members 345 may be disposed between the -Y direction stopper member 343 and the +Y direction stopper member 343 to provide an elastic force acting in a direction to move the stopper members 343 away from each other. For example, FIG. 6 exemplifies a configuration in which one ends of the first elastic members 345 are supported by the structure of the slider 341, but one ends of the first elastic members 345 may be supported by the -Y direction stopper member 343 and the other ends of the first elastic members 345 may be supported by the +Y direction stopper member 343 to provide an elastic force in a direction to move the stopper members 343 away from each other.

According to various embodiments, in the section between the first end inner wall w1 and the protrusion (hereinafter, a "first section I1"), the first slide member 304a (e.g., the slider 341) may be provided with a driving force acting toward the first end inner wall w1, and in the section between the second end inner wall w2 and the protrusion (hereinafter, a "second section I2"), the first slide member 304a be provided with a driving force acting toward the second end inner wall w2. In some embodiments, in the first section I1, when the slider 341 has already be in contact with the first end inner wall w1, the stopper members 343 may be in contact with the inclined surfaces 333b of the guide rib 333a. For example, in the state in which the first slide member 304a (e.g., the slider 341) are not movable away from the hinge bracket 301 anymore, the elastic force of the first elastic member 345 may act in a direction to move the slider 341 away from the hinge bracket 301. Since the slider 341 is in contact with the inner wall w1 of the first end in the state in which the electronic device 200 is unfolded by a predetermined angle (e.g., an angle of 180 degrees), the first housing 201 and the second housing 202 are not pivotable beyond the predetermined angle (e.g., an angle of 180 degrees) from the folded position. In the state in which the electronic device 200 is not rotatable beyond the predetermined angle, the driving force by the first elastic members 345 may limit folding of the electronic device 200. For example, a protrusion (e.g., the inclined surface 333b of the guide rib 333a), the section in which the slide members 304 move, and/or the elastic force of the first elastic member 345 are combined to maintain the electronic device 200 in the state of being unfolded by a predetermined angle.

According to various embodiments, in the state in which the first housing 201 and the second housing 202 are folded to face each other, the stopper members 343 may be in contact with the inclined surfaces 333b of the guide ribs 333a in the second sections I2. In some embodiments, when the first housing 201 and the second housing 202 are folded to face each other, the first slide members 304a (e.g., the sliders 341) may be disposed at positions where the first slide members 304a are not still in contact with the second end inner walls w2. For example, the elastic force of the first elastic members 345 may act as a driving force for moving the first slide member 304a and/or the second slide member 304b (e.g., the sliders 341) in a direction approaching the second end inner walls w2 and/or a force for stably maintaining the state in which the first housing 201 and the second housing 202 are folded to face each other. In this way, the first rotation bracket 303a and the first slide member 304a (and/or the second rotation bracket 303b and the second slide member 304b) allow the first housing 201 (and/or the second housing 202) to slide with respect to the hinge module 300, thereby preventing a tension or compressive force from acting on the display (e.g., the flexible display 203 in FIG. 3) in the unfolded or folded operation. In another embodiment, the stopper members 343 and the guide ribs 333a (e.g., the inclined surfaces 333b) and/or the elastic force of the first elastic member 345 may stably maintain the unfolded or folded state of the electronic device. In another embodiment, the frictional force generated between the stopper members 343 and the rotation brackets 303 (e.g., the guide ribs 333a) may be appropriately set required for an actual product in the unfolding or folding operation of the electronic device 200.

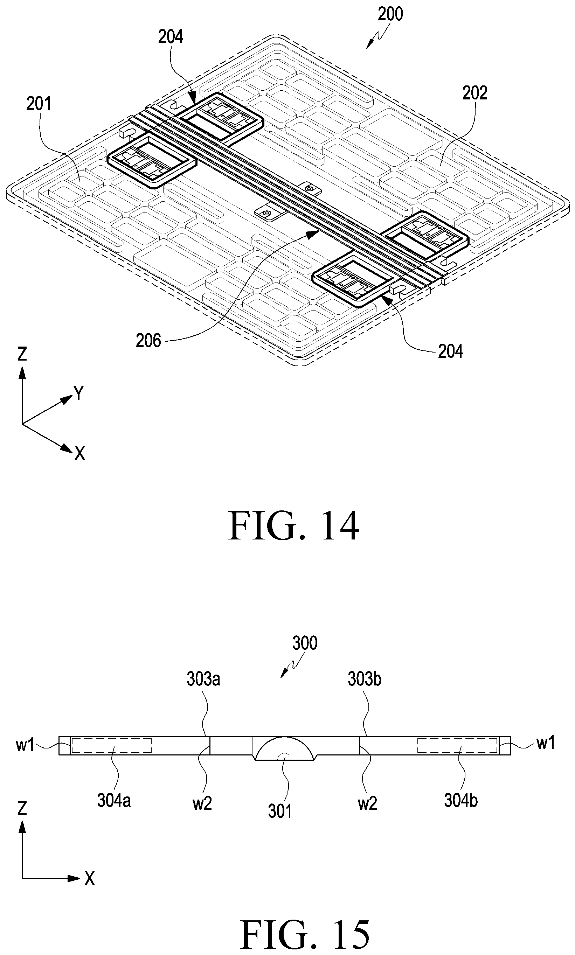

Hereinafter, an operation in which an electronic device 200 is folded from the unfolded state will be described with reference to FIGS. 14 to 24.

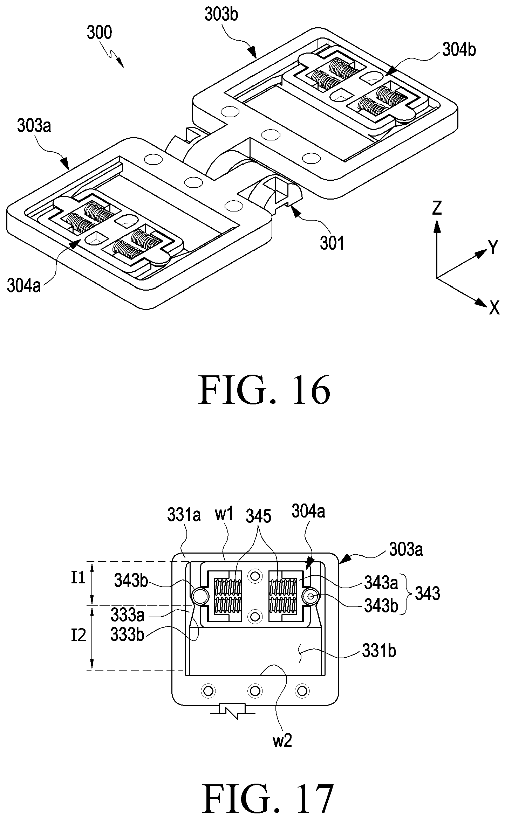

FIG. 14 is a view for describing the unfolded state of an electronic device (e.g., the electronic device 100 or 200 of FIGS. 1 to 4) according to various embodiments disclosed herein. FIG. 15 is a view for describing the arrangement of a hinge module (e.g., the hinge modules 204 or 300 in FIG. 3 or FIG. 5) in the unfolded state of the electronic device 200 according to various embodiments disclosed herein. FIG. 16 is a perspective view illustrating the hinge module 300 in the unfolded state of the electronic device 200 according to various embodiments disclosed herein. FIG. 17 is a view illustrating the position of the first slide member 304a in the unfolded state of the electronic device 200 according to various embodiments disclosed herein.

First, referring to FIGS. 14 to 17, in the unfolded state of the electronic device 200, the second housing 202 may be substantially located at an angle of 180 degrees with respect to the first housing 201, and a display (e.g., the flexible display 103 or 203 in FIG. 1 or FIG. 3) may output a screen on the front surface of the electronic device 200 in the +Z direction. In the unfolded state of the electronic device 200, the first slide member 304a and/or the second slide member 304b are in contact with the first end inner walls w1 substantially in the direction illustrated in FIG. 15. With reference to the directions illustrated in FIG. 15, the first housing 201 (and/or the first rotation bracket 303a) may be restricted from pivoting clockwise, and the second housing 202 (and/or the second rotation bracket 303b) may be restricted from pivoting counterclockwise.

According to various embodiments, since the stopper members 343 are in contact with the inclined surfaces 333b in the first sections I1 in the unfolded state of the electronic device 200, the elastic force of the first elastic members 345 may bring the first slide member 304a (and/or the second slide member 304b) into close contact with the first end inner wall w1. For example, since the first slide member 304a (and/or the second slide member 304b) is brought into close contact with the first end inner wall w1, the electronic device 200 may be restricted from being unfolded beyond a predetermined angle (e.g., an angle of 180 degrees from the folded position), and the elastic force of the first elastic member 345 may restrict the first housing 201 and/or the second housing 202 from pivoting in the direction of folding the first housing 201 and/or the second housing 202.

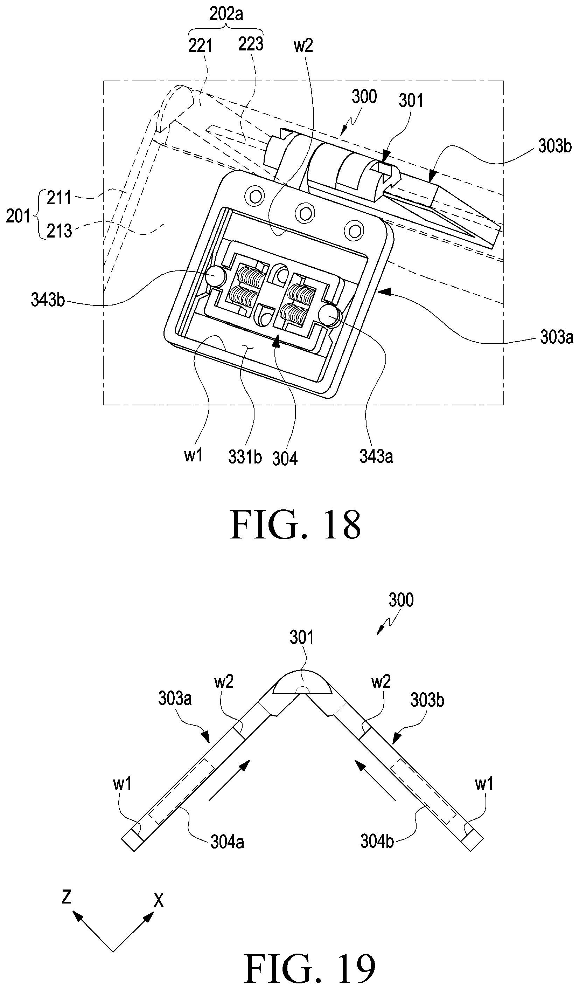

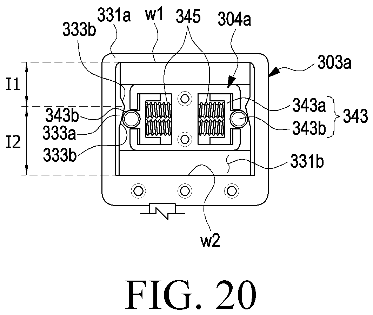

FIG. 18 is a view for describing a state in which housings (e.g., the first housing 201 and the second housing 202 in FIG. 3) of an electronic device of an electronic device (e.g., the electronic device 100 or 200 of FIGS. 1 to 4) according to various embodiments disclosed herein is located to be inclined to each other at an angle of about 90 degrees. FIG. 19 illustrates an arrangement of a hinge module (e.g., the hinge modules 204 or 300 in FIG. 3 or FIG. 5) in a state in which the housings 201 and 202 of the electronic device 200 according to various embodiments disclosed herein are inclined at an angle of about 90 degrees. FIG. 20 is a view illustrating the position of the first slide member 304a in the state in which the housings 201 and 202 of the electronic device 200 are inclined at an angle of about 90 degrees according to various embodiments disclosed herein.

Referring to FIGS. 18 to 20, in the unfolded state of the electronic device 200, the first housing 201 and/or the second housing 202 pivot in the direction in which the first housing 201 and/or the second housing 202 are folded by an external force, for example, by the user's manipulation. As described above, the first rotation bracket 303a and the second rotation bracket 303b are interlocked by the gear shafts 302 and the internal gears 335f, and the first housing 201 (e.g., the first rotation bracket 303a) and the second housing 202 (e.g., the second rotation bracket 303b) may pivot with respect to the hinge bracket 301 at substantially the same time. While the electronic device 200 is being folded, the first housing 201 and/or the second housing 202 may slide in a direction of approaching the hinge bracket 201.

According to various embodiments, in the operation in which the electronic device 200 is folded, the first housing 201 and/or the second housing 202 may slide with respect to the hinge module 300 (e.g., the hinge bracket 301), and the first slide member 304a and/or the second slide member 304b may slide in a direction of approaching the hinge bracket 301. For example, the first slide member 304a and/or the second slide member 304b may move to the second section I2 beyond the protrusions formed by the inclined surfaces 333b to approach the second end inner wall w2 and/or the hinge bracket 301. In the second section I2, the elastic force of the first elastic member 345 may be converted by the inclined surfaces 333b and the stopper member 343 to move the first slide member 304a and/or the second slide member 304b in a direction of approaching the second end inner wall w2 and/or the hinge bracket 301.

According to various embodiments, at any angular position between the unfolded position and the folded position according to the profile of the protrusions and/or the inclined surfaces 333b, the second housing 202 may be stopped in an inclined state with respect to the first housing 201. When the second housing 202 is stopped in the inclined state with respect to the first housing 201, a display (e.g., the flexible display 203 of FIG. 1 or FIG. 3) may output screens in different directions. For example, in the flexible display 203, a first area A1 and a second area A2 may be disposed to face different directions, and the electronic device 200 may provide screens respectively to two users who sit facing each other. The configuration in which the second housing 202 is stopped in the inclined state with respect to the first housing 201 will be described again with reference to FIG. 25.

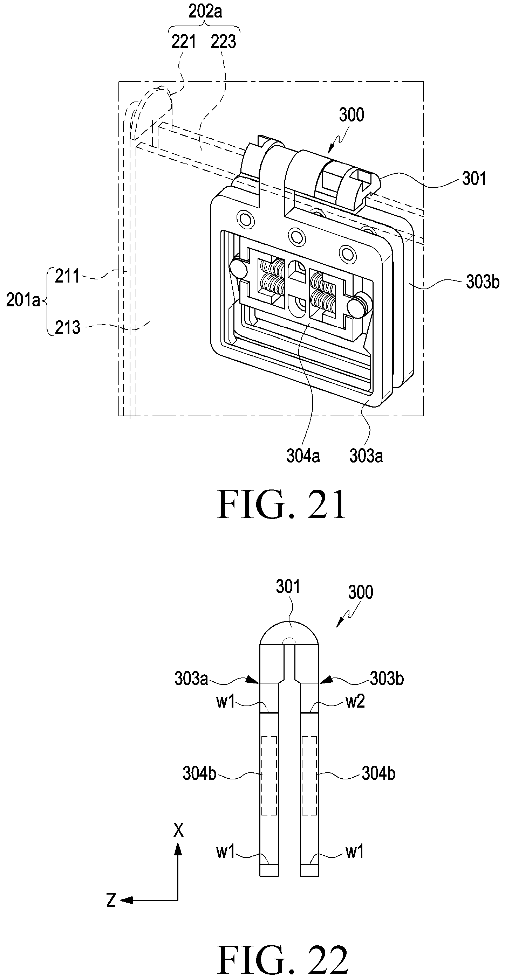

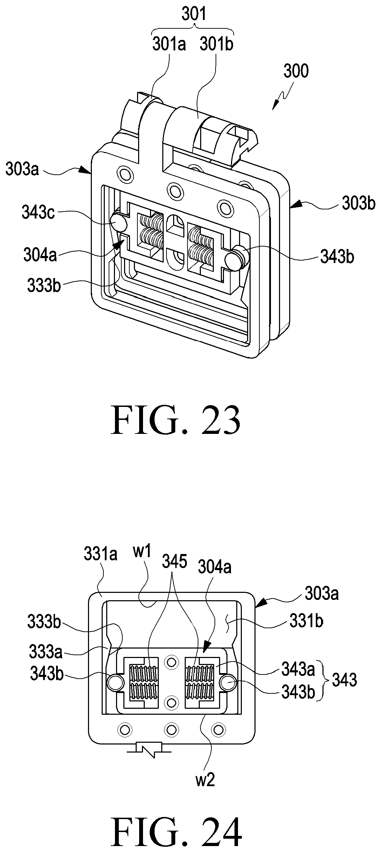

FIG. 21 is a view for describing the folded state of an electronic device (e.g., the electronic device 100 or 200 of FIGS. 1 to 4) according to various embodiments disclosed herein. FIG. 22 is a view for describing the arrangement of a hinge module (e.g., the hinge modules 204 or 300 in FIG. 3 or FIG. 5) in the folded state of the electronic device 200 according to various embodiments disclosed herein. FIG. 23 is a perspective view illustrating the hinge module 300 in the folded state of the electronic device 200 according to various embodiments disclosed herein. FIG. 24 is a view illustrating the position of the first slide member 304a in the folded state of the electronic device 200 according to various embodiments disclosed herein.

Referring to FIGS. 21 to 24, in the folded state of the electronic device 200, the first housing 201 and the second housing 202 may be located to face each other, and may be substantially directly in contact with each other. In the folding operation of the electronic device 200, the first slide member 304a and the second slide member 304b may move in a direction of approaching the hinge bracket 301. In the folded state of the electronic device 200, the first slide member 304a and the second slide member 304b may come into contact with the second end inner walls w2. In some embodiments, before the first housing 201 and the second housing 202 are in direct contact with each other, the first slide member 304a and the second slide member 304b may come into contact with the second end inner walls w2. For example, according to an embodiment, in the folded state, the first slide member 304a and the second slide member 304b may prevent the first housing 201 and the second housing 202 from being brought into direct contact with each other in the state of facing each other.

According to various embodiments, in the state in which the first housing 201 and the second housing 202 have already been in contact with each other to face each other, the first slide member 304a and the second slide member 304b may not be in contact with the second end inner walls w2. In another embodiment, in the folded state of the electronic device 200, the stopper members 343 may be in contact with the inclined surfaces 333b of the second section I2. For example, the elastic force of the first elastic member 345 may still act in a direction to make the first slide member 304a and the second slide member 304b approach the second end inner walls w2. In the state in which the first housing 201 and the second housing 202 have already been in contact with each other to face each other, the elastic force of the first elastic member 345 may bring the first housing 201 and the second housing 202 into closer contact with each other. For example, in the second section I2, the inclined surfaces 333b and the stopper members 343 may maintain the electronic device 200 in the folded state by using the elastic force of the first elastic member 345. The preceding/following relationship in the folding operation between the configuration in which the housings 201 and 202 come into contact with to face each other and the configuration in which the slide members 304 come into contact with the second end inner walls w2 may be appropriately selected in consideration of mechanical stability, or the stability (or noise) to be felt by the user in the folding operation.

According to various embodiments, in a structure in which the first housing 201 and the second housing 202 are in direct contact with each other in the folded state, the electronic device 200 may further include a buffer member (not illustrated). The buffer member may be made of, for example, an elastic material such as urethane or rubber, and may be disposed in at least one of the first housing 201 and the second housing 202. For example, when disposed in the first housing 201, in the folding operation, the buffer member may come into contact the second housing 202 before other structures of the first housing 201. In another embodiment, buffer members may be disposed in the first housing 201 and the second housing 202, respectively, and the buffer members may be configured to come into contact with each other prior to other portions of the housings 201 and 202 in the folding operation.

FIGS. 25 and 26 are views for describing a modification of rotation brackets (e.g., the rotation brackets 303 in FIG. 3 or FIG. 5) illustrate a hinge module (e.g., the hinge modules 204 or 300 in FIG. 3 or FIG. 5) of an electronic device (e.g., the electronic device 100 or 200 of FIGS. 1 to 4) according to various embodiments disclosed herein.

In describing the modification of FIGS. 25 and 26, reference may be made to the slide members 304 and/or the stopper members 343 of FIG. 5 or FIG. 6.

Referring to FIG. 25, a rotation bracket 403 (e.g., the first rotation bracket 303a and/or the second rotation bracket 303b in FIG. 5 or FIG. 6) may include protrusions 433 provided on the inner walls thereof. Each protrusion 433 may include, for example, a first inclined surface 433a, a second inclined surface 433b, and/or a planar section 433c. The planar section 433c may be substantially parallel to the direction in which the slide members 304 move (e.g., the X-axis direction) while interconnecting, for example, the first inclined surface 433a and the second inclined surface 433b. In the unfolded state of the electronic device 200, the first inclined surface 433a may come into contact a stopper member (e.g., the stopper member 343 in FIG. 5 or FIG. 6). For example, the elastic force of the first elastic member (e.g., the first elastic member 345 in FIG. 3 or FIG. 5) may act as a driving force for pivoting the first housing 201 and/or the second housing 202 from the folded position in the unfolding direction. In the structure in which the electronic device 200 is not rotatable beyond a predetermined angle, the driving force for pivoting the housings 201 and 202 in the unfolding direction may substantially maintain the electronic device 200 in the unfolded state.

According to various embodiments, in the folding operation, the stopper member 343 may substantially come into contact with the planar sections 433c. For example, the protrusions 433 and the stopper structures 343 may not generate a driving force for pivoting the housings 201 and 202 or a driving force for moving the slide members 304. In an embodiment, the stopper structure 343 may come into contact with the planar sections 433c when the housings 201 and 202 are located at an angular position of about 90 degrees to 150 degrees relative to each other. For example, the user may use the housings 201 and 202 in an unfolded state at any angle between about 90 degrees and an angle of about 150 degrees. For example, while the stopper member 343 is in contact with the planar sections 433c, the user may use the second housing 202 by disposing the second housing 202 to be inclined at a desired angle with respect to the first housing 201. In this case, as the frictional force generated between the protrusions 433 and the stopper member 343 increases, it is possible to stably maintain the inclination angle between the first housing 201 and the second housing 202. In an embodiment, the electronic device may include a wiring line disposed across the space in which the hinge module (e.g., the hinge module 204 in FIG. 3) or the folding area A3. For example, a flexible printed circuit board interconnecting electric/electronic components accommodated in the first housing 201 and the second housing 202 may be disposed across the space in which the hinge module 204 is disposed, while overlapping the folding area A3. In some embodiments, the wiring line or the flexible printed circuit board may be disposed to be bent in the electronic device (e.g., the electronic device 200 in FIG. 4). In the bent state, the wiring line or the flexible printed circuit board may provide a driving force in the pivoting directions of the housings 201 and 202 or in reverse directions thereof. According to various embodiments, the stopper structure 343 may generate a force to offset the driving force provided by the wiring line or the flexible printed circuit board on the planar sections 433c. For example, the planar sections 433c may be inclined with respect to the direction in which the stopper structure 343 slides. Although not illustrated, protrusions 433 may further include one or more stopping recesses at predetermined positions of the planar sections 433c. For example, when the stopper member 343 is engaged with the stopping recesses while moving in the state of being in contact with the planar sections 433c, the inclination angle between the first housing 201 and the second housing 202 may be stably maintained.

Referring to FIG. 26, two inclined surfaces 533a and 533b may be directly connected to form a protrusion 533 at any position between the first end inner wall w1 and the second end inner wall w2. In the first section I1, a first inclined surface 533a among the inclined surfaces may come into contact with the stopper member 343, wherein a first slide member 304a and/or a second slide member 304b may receive a driving force acting toward the first end inner wall w1. In the second section I2, a second inclined surface 533b among the inclined surfaces may come into contact with the stopper member 343, wherein the first elastic members 345 provide a driving force acting toward the second end inner wall w2 to the first slide member 304a and/or the second slide member 304b.

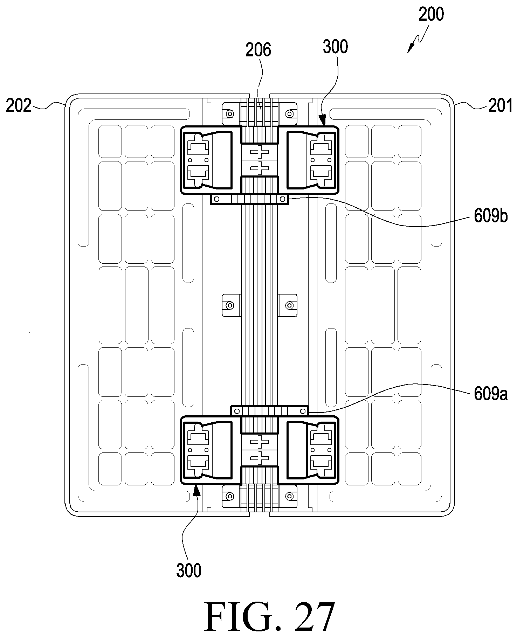

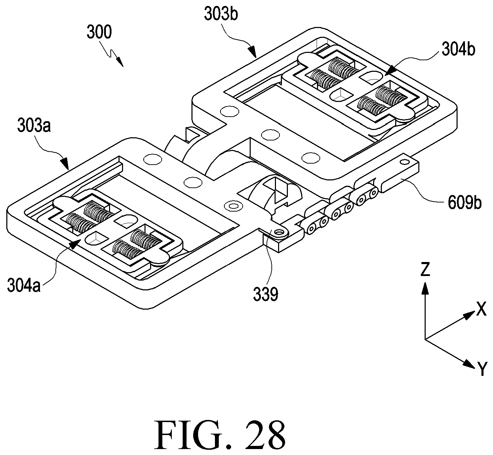

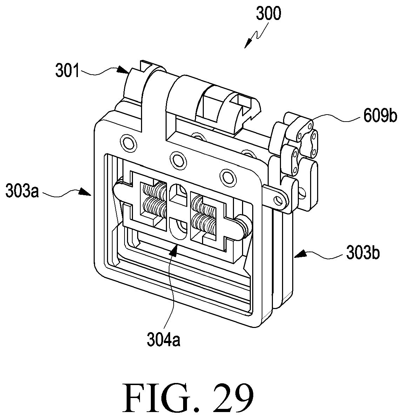

FIG. 27 is a plan view illustrating the configuration of an electronic device (e.g., the electronic device 100 or 200 of FIGS. 1 to 4) according to another one of various embodiments disclosed herein. FIG. 28 is a perspective view illustrating a state in which a linkage chain 609a is disposed in the unfolded state of the electronic device 200 according to another one of various embodiments disclosed herein. FIG. 29 is a perspective view illustrating a state in which the linkage chain 609a is disposed in the unfolded state of the electronic device 200 according to another one of various embodiments disclosed herein.

Referring to FIGS. 27 to 29, the electronic device 200 may further include one or more linkage chains 609a and 609b. The linkage chains 609a and 609b are, for example, chain structures that are deformable between a straight shape and a curved shape, wherein one ends of the linkage chains may be disposed in the first housing 201, and the other ends may be disposed in the second housing 202. In an embodiment, in an operation in which the electronic device 200 is unfolded or folded, the linkage chains 609a and 609b may be deformed between a straight shape and a curved shape without substantially changing the lengths thereof. In some embodiments, the linkage chains 609a and 609b may be arranged in a pair, for example, in a number corresponding to the number of hinge modules 204 or 300 arranged in the electronic device 200. In another embodiment, the linkage chains 609a and 609b may be disposed adjacent to the hinge modules 204 or 300 under the multi-bar assembly 206.

According to various embodiments, one end of the first linkage chain 609a among a plurality (e.g., a pair) of linkage chains 609a and 609b may be bound to the first housing 201 (e.g., the first support plate 213), and the other end of the first linkage chain 609a may be bound to the second rotation bracket 303b. Here, the term "second rotation bracket 303b" may refer to a rotation bracket slidably coupled to the second housing 202. Among the plurality of linkage chains 609a and 609b, one end of the second linkage chain 609b may be bound to the second housing 202 (e.g., the second support plate 223), and the other end of the second linkage chain 609b may be bound to the first rotation bracket 303a, for example, a fastening piece 339. Here, the term "first rotation bracket 303a" may refer to a rotation bracket slidably coupled to the first housing 201.

According to various embodiments, when the first housing 201 and/or the second housing 202 pivot in the folding direction, the first linkage chain 609a may pull the first housing 201 toward the hinge bracket, and the second linkage chain 609b may pull the second housing 202 toward the hinge bracket 301. When the first housing 201 and/or the second housing 202 rotate in the unfolding direction, the first linkage chain 609a may push the first housing 201 away from the hinge bracket 301, and the second linkage chain 609b may push the second housing 202 away from the hinge bracket 301. For example, the first linkage chain 609a may cause the first housing 201 to slide in response to the pivoting of the second rotation bracket 303b, and the second interlock chain 609b may cause the second housing 202 to slide in response to the pivoting of the first rotation bracket 303a. In this way, the gear shafts 302 and the internal gears 335f interlock the pivoting operations of the housings 201 and 202 (e.g., the rotation brackets 303), and in response to the pivoting operations, the linkage chains 609a and 609b induce the sliding operation of the housings 201, 202 (e.g., the slide members 304). As a result, the first housing 201 and the second housing 202 may substantially simultaneously pivot with respect to the hinge modules 204 or 300.

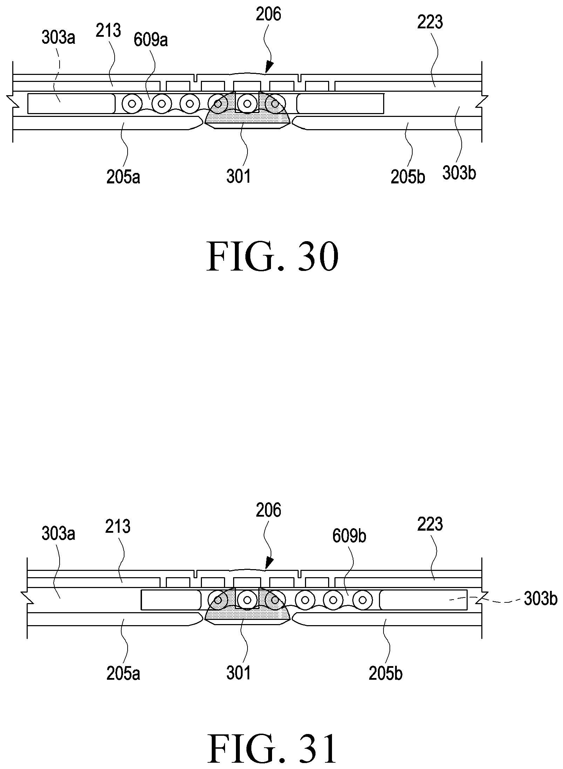

FIG. 30 is a view for describing the arrangement of the first leakage chain 609a among the linkage chains 609a and 609b in the unfolded state of an electronic device (e.g., the electronic device 100 or 200 of FIGS. 1 to 4) according to another one of various embodiments disclosed herein. FIG. 31 is a view for describing the arrangement of the second linkage chain 609b among the linkage chains 609a and 609b in the unfolded state of the electronic device 200 according to another one of various embodiments disclosed herein.

Referring to FIGS. 30 and 31, in the unfolded state of the electronic device 200, the first linkage chain 609a and the second linkage chain 609b may maintain a linear shape substantially parallel to the plane defined by the multi-bar assembly 206. One ends of the linkage chains 609a and 609b are bound to one of the first housing 201 and the second housing 202, and the other ends may be bound to a rotation bracket 303a or 303b disposed in the other one of the first housing 201 and the second housing 202.

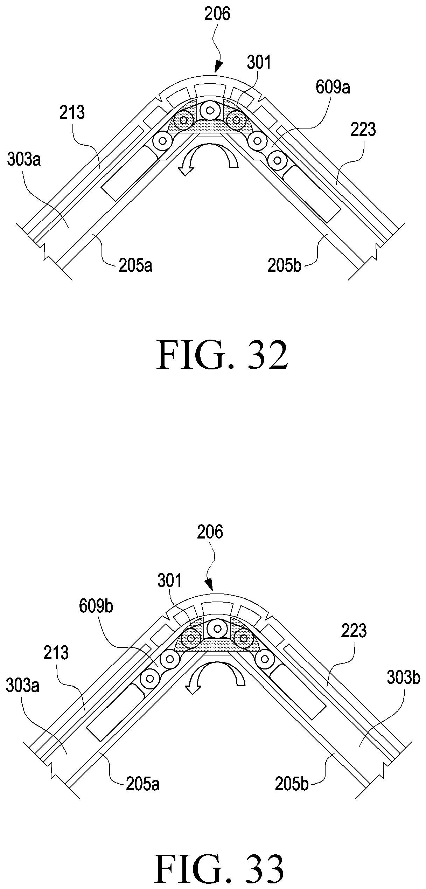

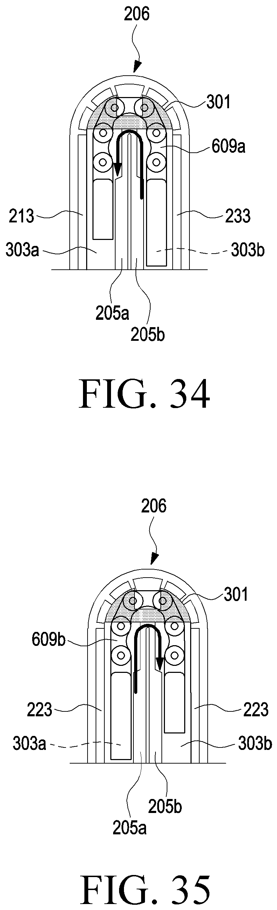

FIG. 32 is a view for describing the arrangement of the first leakage chain 609a among the linkage chains 609a and 609b in the state in which the housings 201 and 202 of the electronic device (e.g., the electronic device 100 or 200 of FIGS. 1 to 4) according to another one of various embodiments disclosed herein are located to be inclined to each other at an angle of about 90 degrees. FIG. 33 is a view for describing the arrangement of the second linkage chain 609b among the linkage chains 609a and 609b in the state in which the housings 201 and 202 of the electronic device 200 according to another one of various embodiments disclosed herein are located to be inclined to each other at an angle of about 90 degrees. FIG. 34 is a view for describing the arrangement of the first linkage chain 609a among the linkage chains 609a and 609b in the folded state of the electronic device 200 according to another one of various embodiments disclosed herein. FIG. 35 is a view for describing the arrangement of the second linkage chain 609b among the linkage chains 609a and 609b in the folded state of the electronic device 200 according to another one of various embodiments disclosed herein.

Referring to FIGS. 32 to 35, when the electronic device 200 is gradually folded from the unfolded position, at least at a position corresponding to the area in which the hinge modules 203 and 300 are disposed, the linkage chains 609a and 609b may be deformed into a curved shape. Among the linkage chains 609a and 609b, the first linkage chain 609a may move the first housing 201 toward the hinge bracket 301 while being deformed into a curved shape, and the second linkage chain 609b may move the second housing 202 toward the hinge bracket 301 while being deformed into a curved shape.

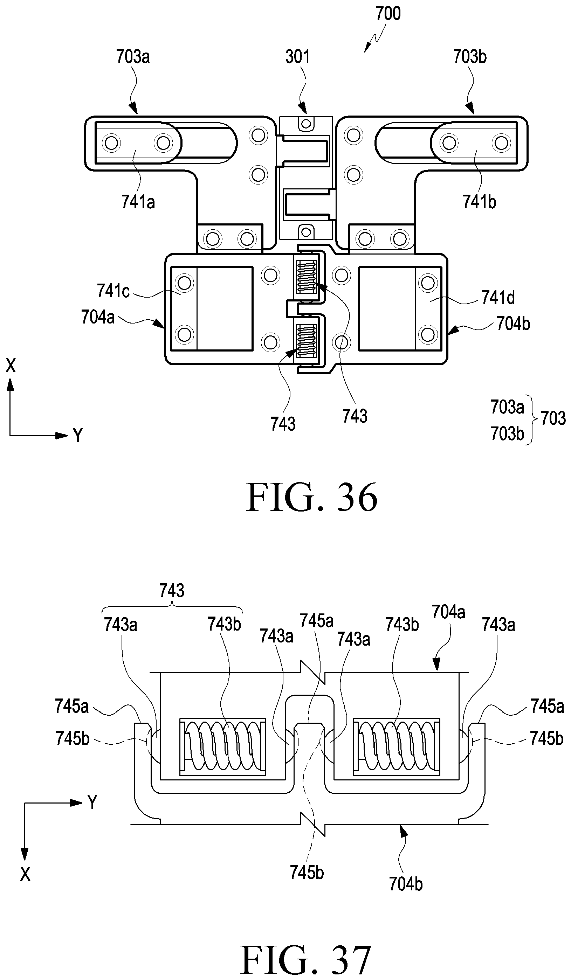

FIG. 36 is a plan view illustrating a hinge module 700 (e.g., the hinge modules 204 or 300 in FIG. 3 or FIG. 5) of an electronic device (e.g., the electronic device 100 or 200 in FIGS. 1 to 4) according to still another one of various embodiments disclosed herein. FIG. 37 is an enlarged view illustrating a stopper structure 743 in the hinge module 700 of the electronic device 200 according to still another one of various embodiments disclosed herein.

Referring to FIGS. 36 and 37 together with FIG. 3, the hinge module 700 may include a hinge bracket 301, rotation brackets 703, 703a, and 703b, slide members 741a and 741b, a stopper bracket 704a, and/or a dummy bracket 704b. The rotation brackets 703 are slidably disposed on one of the first housing 201 and the second housing 202, and may be pivotably coupled to the hinge bracket 301. In an embodiment, the rotation brackets 703 may be coupled to the hinge bracket 301 in a manner similar to the rotation brackets 303 of FIG. 5 or FIG, 6, and a detailed description thereof will be omitted. Each of the slide members 741a and 741b may be slidably disposed on one of the rotation brackets 703, and may be coupled to one of the first housing 201 and the second housing 202. For example, a first slide member 741a among the slide members 741a and 741b may be coupled between the first support plate 213 and the first slide plate 205a, and may be slidably accommodated in the first rotation bracket 703a. A second slide member 741b among the slide members 741a and 741b may be coupled between the second support plate 223 and the second slide plate 205b, and may be slidably accommodated in the second rotation bracket 703b. The configurations of the slide members 741a and 741b may operate similarly to those in previous embodiments, except that the stopper member 343 of FIG. 5 or FIG. 6 is not provided, and a detailed description thereof will be omitted.

According to various embodiments, the stopper bracket 704a may be disposed in one of the first housing 201 and the second housing 202 to pivot with respect to the hinge bracket 201. The dummy bracket 704b may be disposed on the other one of the first housing 201 and the second housing 202, and may be disposed to be substantially symmetrical to the stopper bracket 704a with respect to the hinge bracket 301. In some embodiments, the stopper bracket 704a may be fixed to one of the rotation brackets 703, and the dummy bracket 704b may be fixed to the other one of the rotation brackets 703. According to an embodiment, the stopper bracket 704a may be located at a predetermined distance from the dummy bracket 704b in the folded state of the electronic device 200, and may interfere with the dummy bracket 704b in the unfold state of the electronic device 200. In some embodiments, the electronic device 200 may further include a stopper structure 743, and in the structure further including the stopper structure 743, even when the electronic device 200 is in the unfolded state, the stopper bracket 704a may not interfere with the dummy bracket 704b.

According to various embodiments, the stopper structure 743 may include at least one stopper ball 743a and a second elastic member 743b, and may be disposed on the stopper bracket 704a. In an embodiment, the stopper structure 743 may include a pair of stopper balls 743a and one second elastic member 743b disposed between the stopper balls 743a, and the second elastic member 743b may provide an elastic force in a direction to move the stopper balls 743a away from each other. In the illustrated embodiment, a configuration in which a pair of stopper structures 743 are disposed on the stopper bracket 704a is exemplified, and the number of the stopper structures 743 may vary according to embodiments.

According to various embodiments, the stopper structure 743 may be substantially accommodated in the space provided by the stopper bracket 704a, and the stopper balls 743a may partially protrude outward of the stopper bracket 704a in the -Y direction and/or the +Y direction with the stopper bracket 704a. In an embodiment, the stopper structure 743 may be located to be spaced apart from the dummy bracket 704b by a predetermined distance in the folded state of the electronic device 200, and may interfere with the dummy bracket 704b in the unfolded state of the electronic device 200. For example, the stopper bracket 704a and/or the stopper structure 743 may be configured to restrict the first housing 201 and/or the second housing 202 from pivoting regardless of the user's intention in the unfolded state of the electronic device 200.

According to various embodiments, the dummy bracket 704b may include at least one interference plate 745a corresponding to at least one of the stopper balls 743a. For example, in the state in which the electronic device 200 is unfolded, the stopper balls 743a may interfere with the interference plate(s) 745a. In a structure in which a pair of stopper structures 743 are disposed adjacent to each other, the dummy bracket 704b may include three interference plates 745a, and when the electronic device 200 is unfolded, the stopper balls 743a may interfere with one of the interference plates 745a. In the state of interfering with an interference plate 745a, the stopper balls 743a may more infiltrate into the inside of the stopper bracket 704a than in the state in which the stopper balls 743a do not interfere with the interference plates 745a. For example, the elastic force of the second elastic member 743b may maintain the unfolded state of the electronic device 200 by bringing the stopper balls 743a into close contact with the interference plate 745a. In some embodiments, the electronic device 200 and/or the hinge module 700 may further include stopper recesses 745b formed in the interference plate 745a. For example, in the unfolded state of the electronic device 200, the stopper balls 743a may be at least partially engaged with the stopper recesses 745b to maintain the electronic device 200 in the unfolded state.

According to various embodiments, the stopper bracket 704a and/or the dummy bracket 704b may be directly coupled to one of the rotation brackets 703, and the electronic device 200 and/or the hinge module 700 may further include other slide members 741c and 741d slidably coupled to the stopper bracket 704a and/or the dummy bracket 704b, like the slide members 741a and 741b. A third slide member 741c among the other slide members 741c and 741d may be disposed in the first housing 201 (e.g., between the first support plate 213 and the first slide plate 205a) while being slidably accommodated in the stopper bracket 704a. A fourth slide member 741d among the other slide members 741c and 741d may be disposed in the second housing 202 (e.g., between the second support plate 223 and the second slide plate 205b) while being slidably accommodated in the dummy bracket 704b. For example, the hinge module 700 may be more firmly coupled to the housings 201 and 202 by including two pairs of slide members 741a, 741b, 741c, and 741d.

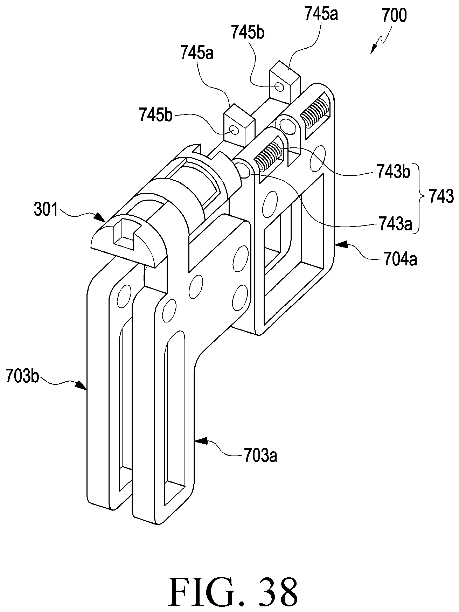

FIG. 38 is a perspective view illustrating a hinge module 700 (e.g., the hinge modules 204 or 300 in FIG. 3 or FIG. 5) in the folded state of an electronic device (e.g., the electronic device 100 or 200 in FIGS. 1 to 4) according to still another one of various embodiments disclosed herein.

Further referring to FIG. 38, in the folded state of the electronic device 200, the stopper bracket 704a and the dummy bracket 704b may be disposed in parallel at positions substantially spaced apart from each other. For example, the stopper structure 743 may be disposed at a predetermined distance from the dummy bracket 704b (e.g., the interference plate 745a). When the first housing 201 and/or the second housing 202 are pivoted to gradually unfold the electronic device 200, the stopper structure 743 and the dummy bracket 704b (e.g., the interference plate 745a) may move toward each other.

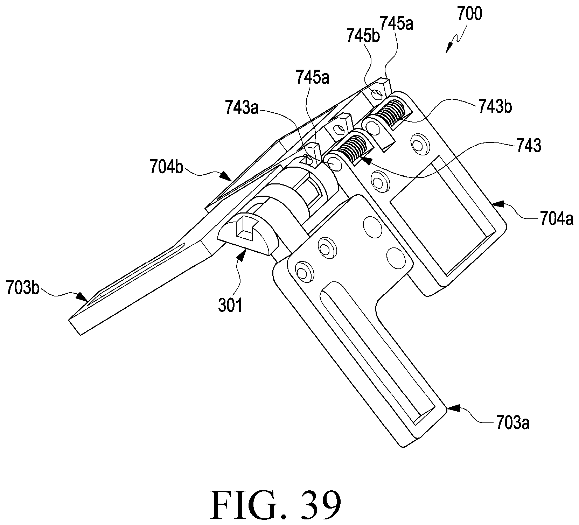

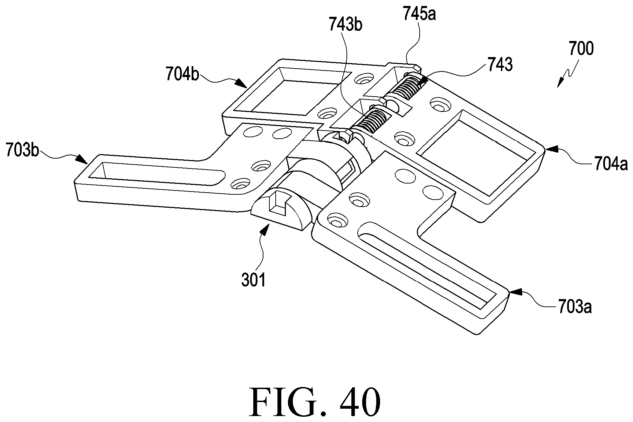

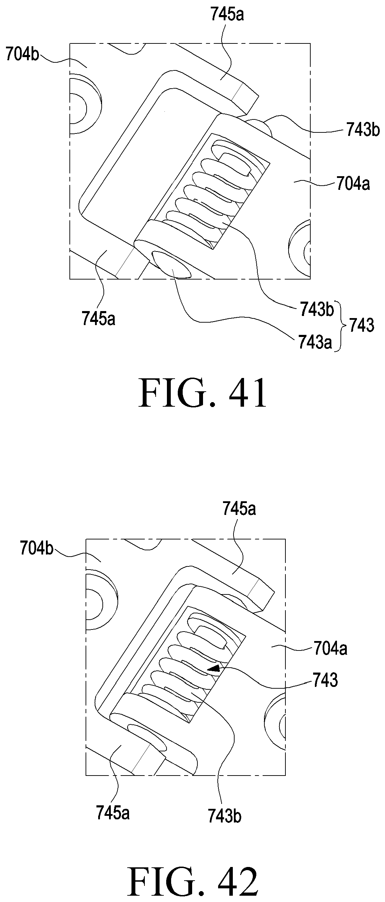

FIG. 39 is a perspective view illustrating the hinge module 700 in the state in which the housings (e.g., the first housing 201 and the second housing 202 in FIG. 3) of an electronic device (e.g., the electronic device 100 or 200 of FIGS. 1 to 4) according to still another one of various embodiments disclosed herein are located to be inclined to each other at an angle of 90 degrees. FIG. 40 is a perspective view illustrating the hinge module 700 in the state in which the electronic device 200 is unfolded to be close to a predetermined angle according to still another one of various embodiments disclosed herein. FIG. 41 is an enlarged view illustrating the stopper structure 743 in the state in which the electronic device 200 is unfolded to be close to a predetermined angle according to still another one of various embodiments disclosed herein. FIG. 42 is an enlarged view illustrating the stopper structure 743 in the state in which the electronic device 200 is unfolded at a predetermined angle according to still another one of various embodiments disclosed herein.

Further referring to FIGS. 39 to 40, as the electronic device 200 is gradually unfolded, the stopper structure 743 may approach the dummy bracket 704b, for example, the interference plate 745a. In another embodiment, as the electronic device 200 is gradually unfolded, the dummy bracket 704b may approach the stopper structure 743. Further referring to FIG. 42, when the electronic device 200 is unfolded at a predetermined angle, for example, when the second housing 202 is located at an angle of 180 degrees with respect to the first housing 210, the stopper structure 743 may be located substantially between the interference plates 745a. For example, when the second housing 202 is located at a 180 degree angle with respect to the first housing 210, the stopper balls 743a may interfere with the interference plate 745a. In some embodiments, when the electronic device 200 is unfolded by a predetermined angle, the stopper balls 743a may be engaged with the stopper recesses 745b provided in the interference plate 745a. As the stopper balls 743a are engaged with the stopper recesses 745b, the electronic device 200 may be maintained in the state of being unfolded state by the predetermined angle. In the operation of unfolding the electronic device 200, the slide members 741a, 741b, 741c, and 741d may move gradually away from the hinge bracket 301.

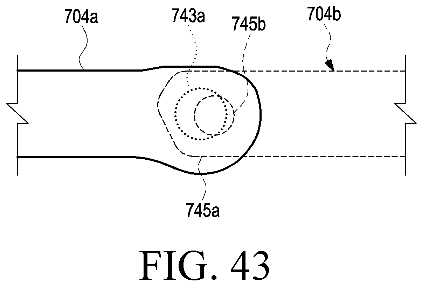

FIG. 43 is a side view illustrating the configuration of a hinge module 700 in the state in which an electronic device (e.g., the electronic device 100 or 200 of FIGS. 1 to 4) according to still another one of various embodiments disclosed herein is unfolded at a predetermined angle.

Referring to FIG. 43, in the state in which the electronic device 200 is unfolded by the predetermined angle, the stopper balls 743a may be partially engaged with the stopper recesses 745b. For example, the stopper balls 743a may have a tendency to move in a direction to be engaged with the stopper recesses 745b due to the elastic force of the second elastic member 743b. The elastic force or the movement tendency of the stopper balls 743a may act in a direction to unfold the electronic device 200 beyond a predetermined angle. In an embodiment, in the state in which the electronic device 200 is unfolded by the predetermined angle, the slide members 741a, 741b, 741c, and 741d may be restrained so as not to move further away from the hinge bracket 301 by the rotation brackets 703, the stopper bracket 704a, and/or the dummy bracket 704b. For example, the slide members 741a, 741b, 741c, and 741d, the rotation brackets 703, the stopper bracket 704a, and/or the dummy bracket 704b may restrict the electronic device 200 from being unfolded beyond a predetermined angle, and in the state in which the electronic device 200 is unfolded by the predetermined angle, the second elastic member 743b may provide a force to unfold the electronic device 200 beyond the predetermined angle. Accordingly, the electronic device 200 may stably maintain the state of being unfolded by the predetermined angle by the force provided by the stopper structure 743 in addition to the structure of the hinge module 700 (e.g., the slide members 741a, 741b, 741c, and 741d, the rotation brackets 703, the stopper bracket 704a, and/or the dummy bracket 704b).

In the above detailed description, a description of details regarding the second bracket member 301b, the second gear shaft 302b, the second rotation bracket 303b, and/or the second slide member 304b of FIG. 3 or FIG. 5 have been partially omitted, but may be easily understood by a person ordinarily skilled in the art through the detailed description of the first bracket member 301a, the first gear shaft 302a, the first rotation bracket 303a, and/or the first slide member 304a. For example, according to various embodiments disclosed herein, on the electronic device 200 and/or the hinge module 300, the second bracket member 301b, the second gear shaft 302b, the second rotation bracket 303b, and/or the second slide member 304b may be symmetrical, in shape or operation, to the first bracket member 301a, the first gear shaft 302a, the first rotation bracket 303a, and/or the first slide member 304a.

In the foregoing detailed description, specific embodiments have been described, but it will be evident to a person ordinarily skilled in the art that various modifications can be made without departing from the scope of the disclosure.

## Claims

1. An electronic device comprising:
a first housing (201);
a second housing (202); and
a hinge module (204, 300) configured to pivotably couple the first housing (201) and the second housing (202) to each other;
wherein the hinge module comprises:
a first hinge bracket member (301a) having a first rotation hole (315b);
a second hinge bracket member (301b) having a second rotation hole (315b);
a first rotation bracket member (303a) comprising a first internal gear (335c) located inside a first hinge arm (335a) and pivotably mounted to the first hinge bracket member (301a), wherein the first hinge arm (335a) is at least partially accommodated in a first working space (311a) of the first hinge bracket member (301a);
a second rotation bracket member (303b) comprising a second internal gear (335c) located inside a second hinge arm (335a) and pivotably mounted to the second hinge bracket member (301b), wherein the second hinge arm (335a) is at least partially accommodated in a first working space (311a) of the second hinge bracket member (301b);
a first gear shaft (302a) comprising a rotation supporting hole (321) formed through at least one end thereof and rotatably mounted in the first rotation hole (315b) of the first hinge bracket member (301a), wherein a portion of the first gear shaft is meshed with the first internal gear (335c);
a second gear shaft (302b) comprising a rotation supporting hole (321) formed through at least one end thereof and rotatably mounted in the second rotation hole (315b) of the second hinge bracket member (301b), wherein a portion of the second gear shaft is meshed with the second internal gear (335c);
a first rotation supporting pole (315a) provided on the second hinge bracket member (301b), disposed adjacent to the second rotation hole (315b) and rotatably accommodated in the rotation supporting hole (321) of the first gear shaft (302a);
a second rotation supporting pole (315a) provided on the first hinge bracket member (301a), disposed adjacent to the first rotation hole (315b) and rotatably accommodated in the rotation supporting hole (321) of the second gear shaft (302b).

2. The electronic device of claim 1, wherein another portion of the first gear shaft (302a) and another portion of the second gear shaft (302b) are disposed to be meshed with each other in the first and second hinge bracket members.

3. The electronic device of claim 1, wherein the hinge module (204, 300) further comprises:
a first slide member (304a) mounted or fixed to the first housing and slidably bound to the first rotation bracket member; and
a second slide member (304b) mounted or fixed to the second housing and slidably bound to the second rotation bracket member.

4. The electronic device of claim 3, wherein the hinge module (204, 300) further comprises:
a first slide hole (331b) provided in the first rotation bracket member to accommodate the first slide member; and
a second slide hole (331b) provided in the second rotation bracket member to accommodate the second slide member, and
wherein, as the first and second rotation bracket members pivot with respect to the first and second hinge bracket members, the first slide member and the second slide member slide toward or away from the first and second hinge bracket members in the first slide hole and the second slide hole, respectively.

5. The electronic device of claim 4, wherein the hinge module (204, 300) further comprises:
a first stopper member (343) disposed in the first slide member and coming into close contact with an inner wall of the first slide hole; and
a second stopper member (343) disposed in the second slide member and coming into close contact with an inner wall of the second slide hole, and
wherein, as the first slide member and the second slide member slide, the first stopper member moves in a state of being in contact with the inner wall of the first slide hole, and the second stopper member moves in a state of being in contact with the inner wall of the second slide hole.

6. The electronic device of claim 4, wherein the hinge module (204, 300) further comprises:
a pair of first stopper members (343) disposed in the first slide member and configured to move in a state of being in contact with the inner wall of the first slide hole as the first slide member slides;
at least one first elastic member (345) configured to provide an elastic force in a direction to move the first stopper members away from each other;
a pair of second stopper members (343) disposed in the second slide member and configured to move in a state of being in contact with the inner wall of the second slide hole as the second slide member slides;
at least one second elastic member (345) configured to provide an elastic force in a direction to move the second stopper members away from each other;
first inclined surfaces (333a) provided on an inner wall of the first slide hole and brought into contact with the first stopper members; and
second inclined surfaces (333b) provided on an inner wall of the second slide hole and brought into contact with the second stopper members, and
wherein the first inclined surfaces form a protrusion toward the first stopper members between both ends of a section with which the first stopper members are in contact, and
the second inclined surfaces form a protrusion toward the second stopper members between both ends of a section with which the second stopper members are in contact.

7. The electronic device of claim 4, wherein the hinge module (204, 300) further comprises:
a first stopper member (343) disposed in the first slide member and comprising a roller which comes into close contact with the inner wall of the first slide hole; and
a second stopper member (343) disposed in the second slide member and comprising a roller which comes into close contact with the inner wall of the second slide hole, and
wherein, as the first slide member and the second slide member slide, the roller of the first stopper member moves while rotating in a state of being in contact with the inner wall of the first slide hole, and the roller of the second stopper member moves while rotating in a state of being in contact with the inner wall of the second slide hole.

8. The electronic device of claim 1, wherein the hinge module (204, 300) further comprises:
a first slide hole provided in the first rotation bracket member;
a second slide hole provided in the second rotation bracket member;
a first slide member mounted or fixed to the first housing, and bound to be slidable toward or away from the first hinge bracket member in the first slide hole as the first rotation bracket member pivots; and
a second slide member mounted or fixed to the second housing, and bound to be slidable toward or away from the second hinge bracket member in the second slide hole as the second rotation bracket member pivots,
wherein the first housing and the second housing are configured to pivot between a first position at which the first and second housings are folded to face each other and a second position unfolded by a predetermined angle from the first position, and
wherein, at the second position, the first slide member is configured to come into contact with a portion of the inner wall of the first slide hole located far away from the first hinge bracket member, and the second slide member is configured to come into contact with a portion of the inner wall of the second slide hole located far away from the second hinge bracket member.

9. The electronic device of claim 8, wherein the hinge module (204, 300) further comprises:
stopper members disposed in at least one of the first slide member and the second slide member and configured to move in a state of being in contact with the inner wall of the first slide hole or the second slide hole as at least one of the first slide member and the second slide member slides;
at least one elastic member disposed in at least one of the first slide member and the second slide member and configured to provide an elastic force in a direction to move the stopper members away from each other; and
at least one inclined surface provided on the inner wall of the first slide hole or the second slide hole to come into contact with the stopper members, and
wherein, at the second position, the stopper members are configured to come into contact with at least a portion of the inclined surface, thereby bringing at least one of the first slide member and the second slide member into close contact with the inner wall of the first slide hole or the second slide hole by using an elastic force of the elastic member.

10. The electronic device of claim 1, further comprising:
a stopper bracket member (704a) mounted in one of the first housing and the second housing;
a stopper structure (743) disposed on the stopper bracket member; and
a dummy bracket member (704b) mounted in one of the first housing and the second housing,
wherein the first housing and the second housing are configured to pivot between a first position at which the first and second housings are folded to face each other and a second position unfolded by a predetermined angle from the first position, and
the stopper structure is configured to be spaced apart from the dummy bracket member at the first position, and to interfere with the dummy bracket member at the second position.

11. The electronic device of claim 10, further comprising a stopper recess (745b) provided in the dummy bracket member,
wherein the stopper structure is configured to be at least partially engaged with the stopper recess to generate a force acting in a direction to move the first housing or the second housing away from the first position at the second position.

12. The electronic device of claim 1, further comprising a flexible display (203) disposed from one surface of the first housing (201) to one surface of the second housing (202) across an area in which the hinge module is disposed,
the first rotation supporting pole (315a) of the second hinge bracket member (301b) is provided on one side of the second rotation hole (315b) while being aligned to face the first rotation hole (315b), and
the second rotation supporting pole (315a) of the first hinge bracket member (301a) is provided on one side of the first rotation hole (315b) while being aligned to face the second rotation hole (315b).

## Patentansprüche

1. Elektronische Vorrichtung, umfassend:
ein erstes Gehäuse (201);
ein zweites Gehäuse (202); und
ein Scharniermodul (204, 300), das dazu konfiguriert ist, das erste Gehäuse (201) und das zweite Gehäuse (202) schwenkbar miteinander zu koppeln;
wobei das Scharniermodul umfasst:
ein erstes Scharnierhalterungselement (301a) mit einem ersten Drehloch (315b);
ein zweites Scharnierhalterungselement (301b) mit einem zweiten Drehloch (315b);
ein erstes Drehhalterungselement (303a), umfassend ein erstes Innenzahnrad (335c), das sich innerhalb eines ersten Scharnierarms (335a) befindet und schwenkbar an dem ersten Scharnierhalterungselement (301a) montiert ist, wobei der erste Scharnierarm (335a) zumindest teilweise in einem ersten Betriebsraum (311a) des ersten Scharnierhalterungselements (301a) aufgenommen ist;
ein zweites Drehhalterungselement (303b), umfassend ein zweites Innenzahnrad (335c), das sich innerhalb eines zweiten Scharnierarms (335a) befindet und schwenkbar an dem zweiten Scharnierhalterungselement (301b) montiert ist, wobei der zweite Scharnierarm (335a) zumindest teilweise in einem ersten Betriebsraum (311a) des zweiten Scharnierhalterungselements (301b) aufgenommen ist;
eine erste Zahnradwelle (302a), umfassend ein Drehstützloch (321), das durch zumindest ein Ende davon gebildet ist und drehbar in dem ersten Drehloch (315b) des ersten Scharnierhalterungselements (301a) montiert ist, wobei ein Abschnitt der ersten Zahnradwelle mit dem ersten Innenzahnrad (335c) in Eingriff steht;
eine zweite Zahnradwelle (302b), umfassend ein Drehstützloch (321), das durch zumindest ein Ende davon gebildet ist und drehbar in dem zweiten Drehloch (315b) des zweiten Scharnierhalterungselements (301b) montiert ist, wobei ein Abschnitt der zweiten Zahnradwelle mit dem zweiten Innenzahnrad (335c) in Eingriff steht;
einen ersten Drehstützstab (315a), der an dem zweiten Scharnierhalterungselement (301b) bereitgestellt ist, benachbart zu dem zweiten Drehloch (315b) angeordnet ist und drehbar in dem Drehstützloch (321) der ersten Zahnradwelle (302a) aufgenommen ist;
einen zweiten Drehstützstab (315a), der an dem ersten Scharnierhalterungselement (301a) bereitgestellt ist, benachbart zu dem ersten Drehloch (315b) angeordnet ist und drehbar in dem Drehstützloch (321) der zweiten Zahnradwelle (302b) aufgenommen ist.

2. Elektronische Vorrichtung nach Anspruch 1, wobei ein anderer Abschnitt der ersten Zahnradwelle (302a) und ein anderer Abschnitt der zweiten Zahnradwelle (302b) angeordnet sind, um in den ersten und zweiten Scharnierhalterungselementen miteinander in Eingriff zu stehen.

3. Elektronische Vorrichtung nach Anspruch 1, wobei das Scharniermodul (204, 300) ferner umfasst:
ein erstes Gleitelement (304a), das an dem ersten Gehäuse montiert oder befestigt ist und verschiebbar an das erste Drehhalterungselement gebunden ist; und
ein zweites Gleitelement (304b), das an dem zweiten Gehäuse montiert oder befestigt ist und verschiebbar an das zweite Drehhalterungselement gebunden ist.

4. Elektronische Vorrichtung nach Anspruch 3, wobei das Scharniermodul (204, 300) ferner umfasst:
ein erstes Gleitloch (331b), das in dem ersten Drehhalterungselement bereitgestellt ist, um das erste Gleitelement aufzunehmen; und
ein zweites Gleitloch (331b), das in dem zweiten Drehhalterungselement bereitgestellt ist, um das zweite Gleitelement aufzunehmen, und
wobei, wenn die ersten und zweiten Drehhalterungselemente in Bezug auf die ersten und zweiten Scharnierhalterungselemente schwenken, das erste Gleitelement und das zweite Gleitelement in dem ersten Gleitloch bzw. dem zweiten Gleitloch zu den ersten und zweiten Scharnierhalterungselementen hin oder von diesen weg gleiten.

5. Elektronische Vorrichtung nach Anspruch 4, wobei das Scharniermodul (204, 300) ferner umfasst:
ein erstes Anschlagelement (343), das in dem ersten Gleitelement angeordnet ist und in engen Kontakt mit einer Innenwand des ersten Gleitlochs kommt; und
ein zweites Anschlagelement (343), das in dem zweiten Gleitelement angeordnet ist und in engen Kontakt mit einer Innenwand des zweiten Gleitlochs kommt, und
wobei, wenn das erste Gleitelement und das zweite Gleitelement gleiten, sich das erste Anschlagelement in einem Zustand bewegt, in dem es in Kontakt mit der Innenwand des ersten Gleitlochs ist, und sich das zweite Anschlagelement in einem Zustand bewegt, in dem es in Kontakt mit der Innenwand des zweiten Gleitlochs ist.

6. Elektronische Vorrichtung nach Anspruch 4, wobei das Scharniermodul (204, 300) ferner umfasst:
ein Paar erster Anschlagelemente (343), die in dem ersten Gleitelement angeordnet sind und konfiguriert sind, sich in einem Zustand zu bewegen, in dem sie in Kontakt mit der Innenwand des ersten Gleitlochs sind, wenn das erste Gleitelement gleitet;
zumindest ein erstes elastisches Element (345), das konfiguriert ist, eine elastische Kraft in einer Richtung bereitzustellen, die ersten Anschlagelemente voneinander weg zu bewegen;
ein Paar zweiter Anschlagelemente (343), die in dem zweiten Gleitelement angeordnet sind und konfiguriert sind, sich in einem Zustand zu bewegen, in dem sie in Kontakt mit der Innenwand des zweiten Gleitlochs sind, wenn das zweite Gleitelement gleitet;
zumindest ein zweites elastisches Element (345), das konfiguriert ist, eine elastische Kraft in einer Richtung bereitzustellen, die zweiten Anschlagelemente voneinander weg zu bewegen;
erste geneigte Oberflächen (333a), die an einer Innenwand des ersten Gleitlochs bereitgestellt sind und in Kontakt mit den ersten Anschlagelementen gebracht werden; und
zweite geneigte Oberflächen (333b), die an einer Innenwand des zweiten Gleitlochs bereitgestellt sind und in Kontakt mit den zweiten Anschlagelementen gebracht sind, und
wobei die ersten geneigten Flächen einen Vorsprung in Richtung der ersten Anschlagelemente zwischen beiden Enden eines Abschnitts bilden, mit welchem die ersten Anschlagelemente in Kontakt sind, und
die zweiten geneigten Flächen einen Vorsprung in Richtung der zweiten Anschlagelemente zwischen beiden Enden eines Abschnitts bilden, mit welchem die zweiten Anschlagelemente in Kontakt sind.

7. Elektronische Vorrichtung nach Anspruch 4, wobei das Scharniermodul (204, 300) ferner umfasst:
ein erstes Anschlagelement (343), das in dem ersten Gleitelement angeordnet ist und eine Rolle umfasst, welche in engen Kontakt mit der Innenwand des ersten Gleitlochs kommt; und
ein zweites Anschlagelement (343), das in dem zweiten Gleitelement angeordnet ist und eine Rolle umfasst, die in engen Kontakt mit der Innenwand des zweiten Gleitlochs kommt, und
wobei, wenn das erste Gleitelement und das zweite Gleitelement gleiten, sich die Rolle des ersten Anschlagelements bewegt, während sie sich in einem Zustand dreht, in dem sie in Kontakt mit der Innenwand des ersten Gleitlochs ist, und sich die Rolle des zweiten Anschlagelements bewegt, während sie sich in einem Zustand dreht, in dem sie in Kontakt mit der Innenwand des zweiten Gleitlochs ist.

8. Elektronische Vorrichtung nach Anspruch 1, wobei das Scharniermodul (204, 300) ferner umfasst:
ein erstes Gleitloch, das in dem ersten Drehhalterungselement bereitgestellt ist;
ein zweites Gleitloch, das in dem zweiten Drehhalterungselement bereitgestellt ist;
ein erstes Gleitelement, das an dem ersten Gehäuse montiert oder befestigt ist und dazu bestimmt ist, in dem ersten Gleitloch in Richtung zu oder weg von dem ersten Scharnierhalterungselement weg verschiebbar zu sein, wenn das erste Drehhalterungselement schwenkt; und
ein zweites Gleitelement, das an dem zweiten Gehäuse montiert oder befestigt ist und dazu bestimmt ist, in dem zweiten Gleitloch in Richtung zu oder von dem zweiten Scharnierhalterungselement weg verschiebbar zu sein, wenn das zweite Drehhalterungselement schwenkt,
wobei das erste Gehäuse und das zweite Gehäuse konfiguriert sind, zwischen einer ersten Position, in welcher das erste und das zweite Gehäuse zusammengeklappt sind, um einander zugewandt zu sein, und einer zweiten Position schwenken, die um einen vorbestimmten Winkel von der ersten Position aufgeklappt ist, und
wobei an der zweiten Position das erste Gleitelement konfiguriert ist, um in Kontakt mit einem Abschnitt der Innenwand des ersten Gleitlochs zu kommen, der sich weit weg von dem ersten Scharnierhalterungselement befindet, und das zweite Gleitelement konfiguriert ist, in Kontakt mit einem Abschnitt der Innenwand des zweiten Gleitlochs zu kommen, der sich weit weg von dem zweiten Scharnierhalterungselement befindet.

9. Elektronische Vorrichtung nach Anspruch 8, wobei das Scharniermodul (204, 300) ferner umfasst:
Anschlagelemente, die in zumindest einem von dem ersten Gleitelement und dem zweiten Gleitelement angeordnet sind und konfiguriert sind, sich in einem Zustand zu bewegen, in dem sie in Kontakt mit der Innenwand des ersten Gleitlochs oder des zweiten Gleitlochs sind, wenn zumindest eines von dem ersten Gleitelement und dem zweiten Gleitelement gleitet;
zumindest ein elastisches Element, das in zumindest einem von dem ersten Gleitelement und dem zweiten Gleitelement angeordnet ist und konfiguriert ist, eine elastische Kraft in einer Richtung bereitzustellen, die Anschlagelemente voneinander weg zu bewegen; und
zumindest eine geneigte Oberfläche, die an der Innenwand des ersten Gleitlochs oder des zweiten Gleitlochs bereitgestellt ist, um in Kontakt mit den Anschlagelementen zu kommen, und
wobei an der zweiten Position die Anschlagelemente konfiguriert sind, in Kontakt mit zumindest einem Abschnitt der geneigten Fläche zu kommen, wodurch zumindest eines von dem ersten Gleitelement und dem zweiten Gleitelement unter Verwendung einer elastischen Kraft des elastischen Elements in engen Kontakt mit der Innenwand des ersten Gleitlochs oder des zweiten Gleitlochs gebracht wird.

10. Elektronische Vorrichtung nach Anspruch 1, ferner umfassend:
ein Anschlaghalterungselement (704a), das in einem von dem ersten Gehäuse und dem zweiten Gehäuse montiert ist;
eine Anschlagstruktur (743), die an dem Anschlaghalterungselement angeordnet ist; und
ein Dummy-Halterungselement (704b), das in einem von dem ersten Gehäuse und dem zweiten Gehäuse montiert ist,
wobei das erste Gehäuse und das zweite Gehäuse konfiguriert sind, zwischen einer ersten Position, in welcher das erste und das zweite Gehäuse zusammengeklappt sind, um einander zugewandt zu sein, und einer zweiten Position schwenken, die um einen vorbestimmten Winkel von der ersten Position aufgeklappt ist, und
die Anschlagstruktur konfiguriert ist, an der ersten Position von dem Dummy-Halterungselement beabstandet zu sein und mit dem Dummy-Halterungselement an der zweiten Position zu interferieren.

11. Elektronische Vorrichtung nach Anspruch 10, ferner umfassend eine Anschlagausnehmung (745b), die in dem Dummy-Halterungselement bereitgestellt ist,
wobei die Anschlagstruktur konfiguriert ist, zumindest teilweise mit der Anschlagausnehmung in Eingriff zu sein, um eine Kraft zu erzeugen, die in einer Richtung wirkt, das erste Gehäuse oder das zweite Gehäuse an der zweiten Position von der ersten Position weg zu bewegen.

12. Elektronische Vorrichtung nach Anspruch 1, ferner umfassend eine flexible Anzeige (203), die von einer Oberfläche des ersten Gehäuses (201) zu einer Oberfläche des zweiten Gehäuses (202) quer über eine Fläche angeordnet ist, in welchem das Scharniermodul angeordnet ist,
der erste Drehstützstab (315a) des zweiten Scharnierhalterungselements (301b) auf einer Seite des zweiten Drehlochs (315b) bereitgestellt ist, während er ausgerichtet ist, dem ersten Drehloch (315b) zugewandt zu sein, und
der zweite Drehstützstab (315a) des ersten Scharnierhalterungselements (301a) auf einer Seite des ersten Drehlochs (315b) bereitgestellt ist, während er ausgerichtet ist, dem zweiten Drehloch (315b) zugewandt zu sein.

## Revendications

1. Dispositif électronique comprenant :
un premier boîtier (201) ;
un second boîtier (202) ; et
un module de charnière (204, 300) conçu pour coupler de manière pivotante le premier boîtier (201) et le second boîtier (202) l'un à l'autre ;
dans lequel le module de charnière comprend :
un premier élément de support de charnière (301a) ayant un premier trou de rotation (315b) ;
un second élément de support de charnière (301b) ayant un second trou de rotation (315b) ;
un premier élément de support de rotation (303a) comprenant un premier engrenage interne (335c) situé à l'intérieur d'un premier bras de charnière (335a) et assemblé de manière pivotante au premier élément de support de charnière (301a), dans lequel le premier bras de charnière (335a) est logé au moins partiellement dans un premier espace de travail (311a) du premier élément de support de charnière (301a) ;
un second élément de support de rotation (303b) comprenant un second engrenage interne (335c) situé à l'intérieur d'un second bras de charnière (335a) et assemblé de manière pivotante au second élément de support de charnière (301b), dans lequel le second bras de charnière (335a) est logé au moins partiellement dans un premier espace de travail (311a) du second élément de support de charnière (301b) ;
un premier arbre d'engrenage (302a) comprenant un trou de support de rotation (321) formé à travers au moins une extrémité de celui-ci et monté rotatif dans le premier trou de rotation (315b) du premier élément de support de charnière (301a), dans lequel une partie du premier arbre d'engrenage est engrenée avec le premier engrenage interne (335c) ;
un second arbre d'engrenage (302b) comprenant un trou de support de rotation (321) formé à travers au moins une extrémité de celui-ci et monté rotatif dans le second trou de rotation (315b) du second élément de support de charnière (301b), dans lequel une partie du second arbre d'engrenage est engrenée avec le second engrenage interne (335c) ;
un premier montant de support de rotation (315a) prévu sur le second élément de support de charnière (301b), disposé adjacent au second trou de rotation (315b) et logé de manière rotative dans le trou de support de rotation (321) du premier arbre d'engrenage (302a) ;
un second montant de support de rotation (315a) prévu sur le premier élément de support de charnière (301a), disposé adjacent au premier trou de rotation (315b) et logé de manière rotative dans le trou de support de rotation (321) du second arbre d'engrenage (302b).

2. Dispositif électronique selon la revendication 1, dans lequel une autre partie du premier arbre d'engrenage (302a) et une autre partie du second arbre d'engrenage (302b) sont disposées pour être engrenées l'une avec l'autre dans les premier et second éléments de support de charnière.

3. Dispositif électronique selon la revendication 1, dans lequel le module de charnière (204, 300) comprend en outre :
un premier élément de coulissement (304a) assemblé ou fixé au premier boîtier et lié de manière coulissante au premier élément de support de rotation ; et
un second élément de coulissement (304b) assemblé ou fixé au second boîtier et lié de manière coulissante au second élément de support de rotation.

4. Dispositif électronique selon la revendication 3, dans lequel le module de charnière (204, 300) comprend en outre :
un premier trou de coulissement (331b) prévu dans le premier élément de support de rotation pour loger le premier élément de coulissement ; et
un second trou de coulissement (331b) prévu dans le second élément de support de rotation pour loger le second élément de coulissement, et
dans lequel, lorsque les premier et second éléments de support de rotation pivotent par rapport aux premier et second éléments de support de charnière, le premier élément de coulissement et le second élément de coulissement coulissent vers ou à l'écart des premier et second éléments de support de charnière dans le premier trou de coulissement et le second trou de coulissement, respectivement.

5. Dispositif électronique selon la revendication 4, dans lequel le module de charnière (204, 300) comprend en outre :
un premier élément d'arrêt (343) disposé dans le premier élément de coulissement et venant en contact étroit avec une paroi intérieure du premier trou de coulissement ; et
un second élément d'arrêt (343) disposé dans le second élément de coulissement et venant en contact étroit avec une paroi interne du second trou de coulissement, et
dans lequel, lorsque le premier élément de coulissement et le second élément de coulissement coulissent, le premier élément d'arrêt se déplace dans un état de contact avec la paroi interne du premier trou de coulissement, et le second élément d'arrêt se déplace dans un état de contact avec la paroi interne du second trou de coulissement.

6. Dispositif électronique selon la revendication 4, dans lequel le module de charnière (204, 300) comprend en outre :
une paire de premiers éléments d'arrêt (343) disposés dans le premier élément de coulissement et conçus pour se déplacer dans un état de contact avec la paroi interne du premier trou de coulissement lorsque le premier élément de coulissement coulisse ;
au moins un premier élément élastique (345) conçu pour fournir une force élastique dans une direction pour éloigner les premiers éléments d'arrêt l'un de l'autre ;
une paire de seconds éléments d'arrêt (343) disposés dans le second élément de coulissement et conçus pour se déplacer dans un état de contact avec la paroi interne du second trou de coulissement lorsque le second élément de coulissement coulisse ;
au moins un second élément élastique (345) conçu pour fournir une force élastique dans une direction pour éloigner les seconds éléments d'arrêt l'un de l'autre ;
des premières surfaces inclinées (333a) prévues sur une paroi intérieure du premier trou de coulissement et amenées en contact avec les premiers éléments d'arrêt ; et
des secondes surfaces inclinées (333b) prévues sur une paroi interne du second trou de coulissement et amenées en contact avec les seconds éléments d'arrêt, et
dans lequel les premières surfaces inclinées forment une saillie vers les premiers éléments d'arrêt entre les deux extrémités d'une section avec laquelle les premiers éléments d'arrêt sont en contact, et
les secondes surfaces inclinées forment une saillie vers les seconds éléments d'arrêt entre les deux extrémités d'une section avec laquelle les seconds éléments d'arrêt sont en contact.

7. Dispositif électronique selon la revendication 4, dans lequel le module de charnière (204, 300) comprend en outre :
un premier élément d'arrêt (343) disposé dans le premier élément de coulissement et comprenant un rouleau qui vient en contact étroit avec la paroi interne du premier trou de coulissement ; et
un second élément d'arrêt (343) disposé dans le second élément de coulissement et comprenant un rouleau qui vient en contact étroit avec la paroi interne du second trou de coulissement, et
dans lequel, lorsque le premier élément de coulissement et le second élément de coulissement coulissent, le rouleau du premier élément d'arrêt se déplace tout en tournant dans un état de contact avec la paroi interne du premier trou de coulissement, et le rouleau du second élément d'arrêt se déplace tout en tournant dans un état de contact avec la paroi interne du second trou de coulissement.

8. Dispositif électronique selon la revendication 1, dans lequel le module de charnière (204, 300) comprend en outre :
un premier trou de coulissement prévu dans le premier élément de support de rotation ;
un second trou de coulissement prévu dans le second élément de support de rotation ;
un premier élément de coulissement monté ou fixé au premier boîtier, et lié pour pouvoir coulisser vers ou à l'écart du premier élément de support de charnière dans le premier trou de coulissement lorsque le premier élément de support de rotation pivote ; et
un second élément de coulissement assemblé ou fixé au second boîtier, et lié pour pouvoir coulisser vers ou à l'écart du second élément de support de charnière dans le second trou de coulissement lorsque le second élément de support de rotation pivote,
dans lequel le premier boîtier et le second boîtier sont conçus pour pivoter entre une première position dans laquelle les premier et second boîtiers sont pliés pour se faire face et une seconde position dépliée d'un angle prédéterminé par rapport à la première position, et
dans lequel, dans la seconde position, le premier élément de coulissement est conçu pour venir en contact avec une partie de la paroi interne du premier trou de coulissement située loin du premier élément de support de charnière, et le second élément de coulissement est conçu pour venir en contact avec une partie de la paroi interne du second trou de coulissement située loin du second élément de support de charnière.

9. Dispositif électronique selon la revendication 8, dans lequel le module de charnière (204, 300) comprend en outre :
des éléments d'arrêt disposés dans au moins l'un du premier élément de coulissement et du second élément de coulissement et conçus pour se déplacer dans un état de contact avec la paroi interne du premier trou de coulissement ou du second trou de coulissement lorsqu'au moins l'un du premier élément de coulissement et du second élément de coulissement coulisse ;
au moins un élément élastique disposé dans au moins l'un du premier élément de coulissement et du second élément de coulissement et conçu pour fournir une force élastique dans une direction pour éloigner les éléments d'arrêt l'un de l'autre ; et
au moins une surface inclinée prévue sur la paroi interne du premier trou de coulissement ou du second trou de coulissement pour venir en contact avec les éléments d'arrêt, et
dans lequel, dans la seconde position, les éléments d'arrêt sont conçus pour venir en contact avec au moins une partie de la surface inclinée, amenant ainsi au moins l'un du premier élément de coulissement et du second élément de coulissement en contact étroit avec la paroi interne du premier trou de coulissement ou du second trou de coulissement en utilisant une force élastique de l'élément élastique.

10. Dispositif électronique selon la revendication 1, comprenant en outre :
un élément de support d'arrêt (704a) monté dans l'un du premier boîtier et du second boîtier ;
une structure d'arrêt (743) disposée sur l'élément de support d'arrêt ; et
un élément de support factice (704b) monté dans l'un du premier boîtier et du second boîtier,
dans lequel le premier boîtier et le second boîtier sont conçus pour pivoter entre une première position dans laquelle les premier et second boîtiers sont pliés pour se faire face et une seconde position dépliée d'un angle prédéterminé par rapport à la première position, et
la structure d'arrêt est conçue pour être espacée de l'élément de support factice dans la première position, et pour interférer avec l'élément de support factice dans la seconde position.

11. Dispositif électronique selon la revendication 10, comprenant en outre un évidement d'arrêt (745b) prévu dans l'élément de support factice,
dans lequel la structure d'arrêt est conçue pour venir au moins partiellement en prise avec l'évidement d'arrêt pour générer une force agissant dans une direction pour éloigner le premier boîtier ou le second boîtier de la première position dans la seconde position.

12. Dispositif électronique selon la revendication 1, comprenant en outre un affichage souple (203) disposé depuis une surface du premier boîtier (201) vers une surface du second boîtier (202) à travers une zone dans laquelle le module de charnière est disposé,
le premier montant de support de rotation (315a) du second élément de support de charnière (301b) est prévu d'un côté du second trou de rotation (315b) tout en étant aligné pour faire face au premier trou de rotation (315b), et
le second montant de support de rotation (315a) du premier élément de support de charnière (301a) est prévu sur un côté du premier trou de rotation (315b) tout en étant aligné pour faire face au second trou de rotation (315b).
